# EUROPEAN PATENT APPLICATION

(11) **EP 1 906 402 A2**
(43) Date of publication of application: **02.04.2008**
(21) Application number: 07018615.0
(22) Date of filing: 21.09.2007
(51) Int. Cl.: G11B 7/246

(54) **Optical information recording medium**

(30) Priority: 29.09.2006 JP 2006268278
(71) Applicant: FUJIFILM Corporation, Minato-ku Tokyo 106-8620 (JP)
(72) Inventor: Watanabe, Kousuke, Minami-ashigara-shi, Kanagawa 250-0193 (JP); Tateishi, Keiichi, Minami-ashigara-shi, Kanagawa 250-0193 (JP); Fujie, Yoshihiko, Minami-ashigara-shi, Kanagawa 250-0193 (JP); Katayama, Kazutoshi, Odawara-shi, Kanagawa 250-0001 (JP)
(74) Representative: Klunker . Schmitt-Nilson . Hirsch

(57) **Abstract**

A first optical information recording medium (10A) comprises a first WORM-type recording layer (14) on which information is recorded by irradiation with a laser light having a wavelength of 440 nm or less, and a cover layer (16) having a thickness of 0.01 to 0.5 mm, formed in this order on a first substrate (12) having a thickness of 0.7 to 2 mm. Specifically, for example, a first light reflection layer (18), the first WORM-type recording layer (14), a barrier layer (20), a first adhesion layer (22), and the cover layer (16) are formed in this order on the first substrate (12). The first WORM-type recording layer (14) comprises at least one azo dye. The azo dye has an -N=N-group and a pyrazole ring bonded thereto, and contains no metal atoms or metal ions in the molecule.

## Description

### BACKGROUND OF THE INVENTION

### Field of the Invention

The present invention relates to an optical information recording medium for information recording/reproduction using a laser light, and particularly to a heat mode-type optical information recording medium suitable for information recording/reproduction using a laser light having a short wavelength of 440 nm or less.

### Description of the Related Art

Recently Hi-Vision broadcasts and networks such as Internet have been rapidly popularized. Further, in view of upcoming HDTV (High Definition Television) broadcasting, there is an increasing demand for large-capacity recording media for easily recording image information at low costs. Though CD-Rs, and DVD-Rs capable of high-density recording using visible laser lights (630 to 680 nm) have been established to some extent as large-capacity recording media, the recording capacities thereof are not sufficiently large for future requirements. Thus, development of optical disks, which utilize laser lights with shorter wavelengths to achieve higher recording densities and larger recording capacities as compared with the DVD-Rs, has been progressed. For example, an optical recording disk utilizing a 405-nm blue laser light, called a Blu-ray disc, has been proposed.

In conventional DVD-R type optical disks, azo-metal chelate dyes have been advantageously used as dye compounds in recording layers (see Japanese Laid-Open Patent Publication Nos. 11-310728, 11-130970, and 2002-274040, etc.) These azo-metal chelate dyes are excellent in light fastness, and this may be because acceleration of dye exciton quenching, reduction of hydrazone form in azo-hydrazone tautomeric equilibrium, singlet oxygen quenching, etc. are achieved by the metal ions. As compared with the azo-metal chelate dyes, conventional azo dyes with no metal ions are poor in light fastness. Further, the azo-metal chelate dyes have bulky molecular structures, and as a result, films of the dyes can be formed with less crystallization, to have high stability. Though the azo-metal chelate dyes have preferably been used in conventional optical information recording media, the dyes contain the metal ions harmful for the environment and human body. Thus, use of the azo dyes with no metal ions is highly significant in view of expansion of markets for the optical information recording media and the dyes. However, in the case of using the azo dyes with no metals, crystallization is easily caused in film formation, and it is difficult to use the dyes for disk production. For these reasons, the azo dyes with no metals are hardly used in optical disks requiring high light fastness, and an azo dye having satisfactory light fastness and recording properties is hardly known.

A plurality of pyrazole-containing azo dyes have recently been disclosed in Japanese Laid-Open Patent Publication No. 2005-162812. However, a recording laser used in Examples has a wavelength of 633 nm, and the effects of the dyes described in Japanese Laid-Open Patent Publication No. 2005-162812 are unknown under a wavelength of 440 nm or less.

### SUMMARY OF THE INVENTION

An object of the present invention is to provide an optical information recording medium excellent in electronic information recording/reproducing properties and light fastness, particularly an optical information recording medium capable of information recording/reproduction by using a blue laser light having a wavelength of 440 nm or less.

It has found that, in an optical information recording medium for information recording/reproduction with a blue laser light having a wavelength of 440 nm or less, a particular azo dye having at least one pyrazole ring bonded to an -N=N- group is effective for obtaining excellent light fastness, solubility, film stability, and recording properties. The present invention has been accomplished by the finding.

The above object is achieved by the following features.
[1] An optical information recording medium according to the present invention, comprising a recording layer on which information is recorded by irradiation with a laser light having a wavelength of 440 nm or less, wherein the recording layer comprises at least an azo dye. The azo dye has an -N=N- group and a nitrogen-containing heterocyclic group bonded to one nitrogen atom thereof, and contains no metal atoms or metal ions in the molecule, and the nitrogen-containing heterocyclic group is represented by one of the following general formulae (I-1) to (I-3): 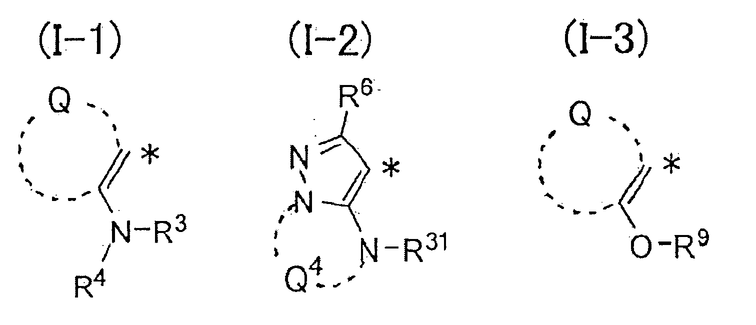 wherein Q represents a group forming a nitrogen-containing heterocycle, Q⁴ represents a group for connecting the adjacent nitrogen atoms, thereby forming a nitrogen-containing heterocycle, R³, R⁴, R⁶, and R⁹ independently represent a hydrogen atom or a substituent, R³¹ represents a monovalent substituent, and each asterisk * represents a position at which the nitrogen-containing heterocyclic group is bonded to the -N=N- group.
   The azo dye further comprises a pyrazole ring bonded to at least one nitrogen atom of the -N=N- group, and the pyrazole ring may be formed by Q in the general formula (I-1) or (I-3), or may be the pyrazole ring in the general formula (I-2).
[2] An optical information recording medium according to [1], wherein the azo dye has the nitrogen-containing heterocyclic group bonded to one nitrogen atom of the -N=N-group and a pyrazole ring bonded to the other nitrogen atom thereof, and contains no metal atoms or metal ions in the molecule, and the nitrogen-containing heterocyclic group is represented by one of the following general formulae (I-1) to (I-3): 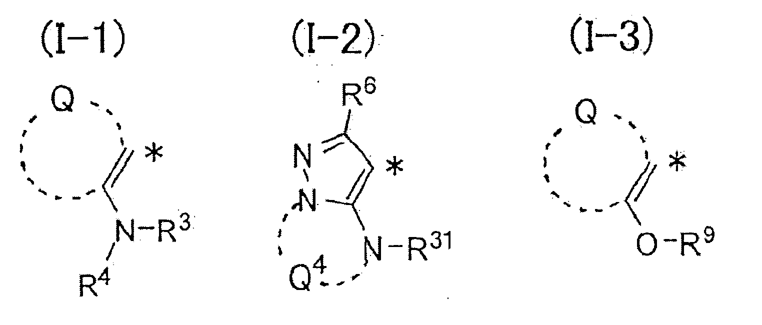 wherein Q represents a group forming a nitrogen-containing heterocycle, Q⁴ represents a group for connecting the adjacent nitrogen atoms, thereby forming a nitrogen-containing heterocycle, R³, R⁴, R⁶, and R⁹ independently represent a hydrogen atom or a substituent, R³¹ represents a monovalent substituent, and each asterisk * represents a position at which the nitrogen-containing heterocyclic group is bonded to the -N=N- group.
[3] An optical information recording medium according to [2], wherein the azo dye is represented by the following general formula (1): 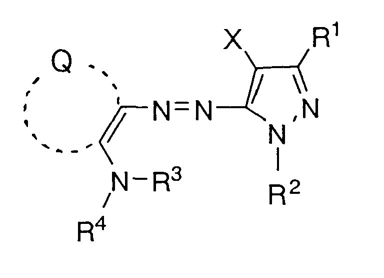 wherein Q represents a group forming a nitrogen-containing heterocycle, X represents an electron attractive group having a Hammett's substituent constant σp of 0.20 or more, and R¹ to R⁴ independently represent a hydrogen atom or a substituent.
[4] An optical information recording medium according to [3], wherein the azo dye is represented by the following general formula (2): 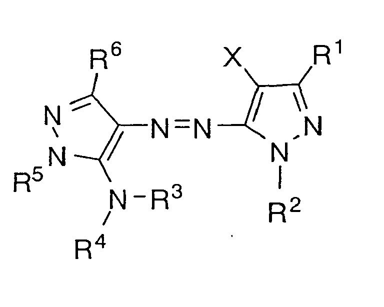 wherein X represents an electron attractive group having a Hammett's substituent constant σp of 0.20 or more, and R¹ to R⁶ independently represent a hydrogen atom or a substituent.
[5] An optical information recording medium according to [2], wherein the azo dye is represented by the following general formula (3): 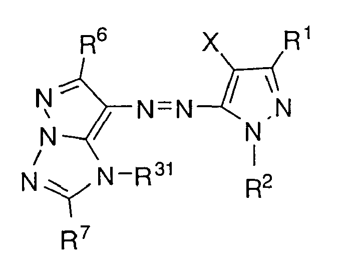 wherein X represents an electron attractive group having a Hammett's substituent constant σp of 0.20 or more, R¹, R², R⁶, and R⁷ independently represent a hydrogen atom or a substituent, and R³¹ represents a monovalent substituent.
[6] An optical information recording medium according to [2], wherein the azo dye is represented by the following general formula (4): 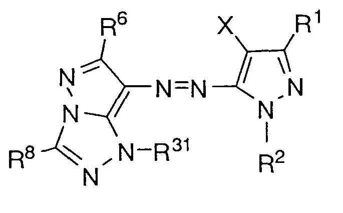 wherein X represents an electron attractive group having a Hammett's substituent constant σp of 0.20 or more, R¹, R², R⁶, and R⁸ independently represent a hydrogen atom or a substituent, and R³¹ represents a monovalent substituent.
[7] An optical information recording medium according to [2], wherein the azo dye is represented by the following general formula (5): 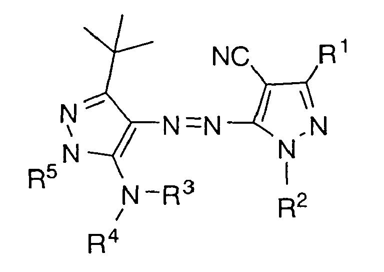 wherein R¹, R², R³, R⁴, and R⁵ independently represent a hydrogen atom or a substituent.
[8] An optical information recording medium according to [1], wherein the azo dye is represented by the following general formula (6): 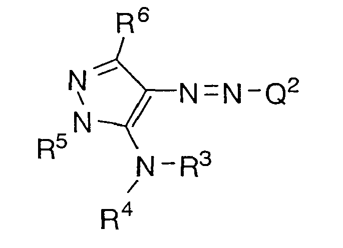 wherein Q² represents a nitrogen-containing heterocyclic group other than pyrazole groups, and R³ to R⁶ independently represent a hydrogen atom or a substituent.
[9] An optical information recording medium according to [1], wherein the azo dye is represented by the following general formula (7): 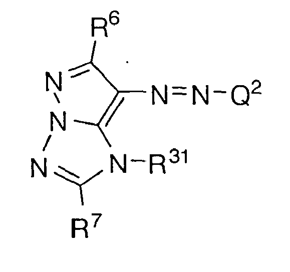 wherein Q² represents a nitrogen-containing heterocyclic group, R⁶ and R⁷ independently represent a hydrogen atom or a substituent, and R³¹ represents a monovalent substituent.
[10] An optical information recording medium according to [1], wherein the azo dye is represented by the following general formula (8): 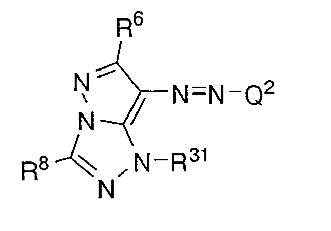 wherein Q² represents a nitrogen-containing heterocyclic group, R⁶ and R⁸ independently represent a hydrogen atom or a substituent, and R³¹ represents a monovalent substituent.
[11] An optical information recording medium according to any one of [8] to [10], wherein Q² represents a substituted or unsubstituted 1,2,4-thiadiazole group, a substituted or unsubstituted 1,3,4-thiadiazole group, or a 4,5-dicyanoimidazole group.
[12] An optical information recording medium according to [2], wherein the azo dye is represented by the following general formula (9): 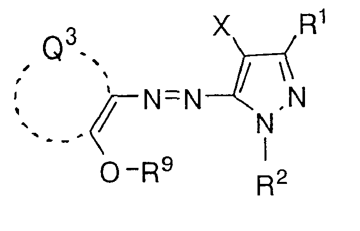 wherein Q³ represents a group forming a nitrogen-containing heterocycle, X represents an electron attractive group having a Hammett's substituent constant σp of 0.20 or more, and R¹, R², and R⁹ independently represent a hydrogen atom or a substituent.
[13] An optical information recording medium according to [12], wherein the nitrogen-containing heterocyclic group formed by Q³ contains a pyrazole ring, a pyrrole ring, an imidazole ring, a thiazole ring, an oxazole ring, a pyrroline ring, a pyridine ring, a pyrazine ring, a pyrimidine ring, a pyridazine ring, a 1,2,4-triazine ring, or a ring forming a moiety represented by one of the following formulae (C-1) to (C-4): 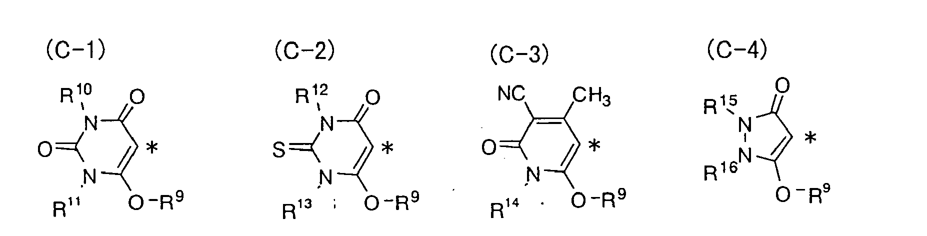 wherein R⁹ to R¹⁶ independently represent a hydrogen atom or a substituent, and each asterisk * represents a position at which the nitrogen-containing heterocyclic group is bonded to the -N=N- group.
[14] An optical information recording medium according to [1], further comprising a light reflection layer comprising a metal.
[15] An optical information recording medium according to [1], further comprising a protective layer.
[16] An optical information recording medium according to [1], wherein the recording layer is formed on a substrate, the substrate is a transparent, disc-shaped substrate having pregrooves with a track pitch of 50 to 500 nm on a surface, and the recording layer is formed on the surface having the pregrooves.

As described above, according to the present invention, there is provided, by using the particular azo dye in the recording layer, the optical information recording medium excellent in film stability and in light fastness before and after recording, particularly the optical information recording medium capable of information recording by irradiation with a laser light having a wavelength of 440 nm or less.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a cross-sectional view partly showing a first optical information recording medium according to an embodiment of the present invention.
FIG. 2 is a cross-sectional view partly showing a second optical information recording medium according to another embodiment of the present invention.

### DESCRIPTION OF THE PREFERRED EMBODIMENTS

The optical information recording medium of the present invention is described in detail below.

The optical information recording medium of the present invention has at least one recording layer on a substrate, and information can be recorded on the recording layer. It is preferred that the optical information recording medium further has a light reflection layer and a protective layer.

The recording layer in the optical information recording medium comprises at least one azo dye. The azo dye has an -N=N- group and a nitrogen-containing heterocyclic group bonded to one nitrogen atom thereof, and contains no metal atoms or metal ions in the molecule, and the nitrogen-containing heterocyclic group is represented by one of the following general formulae (I-1) to (I-3): 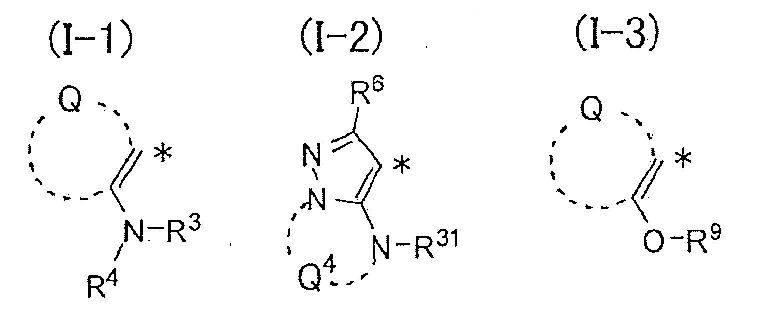 wherein Q represents a group forming a nitrogen-containing heterocycle, Q⁴ represents a group for connecting the adjacent nitrogen atoms, thereby forming a nitrogen-containing heterocycle, R³, R⁴, R⁶, and R⁹ independently represent a hydrogen atom or a substituent, R³¹ represents a monovalent substituent, and each asterisk * represents a position at which the nitrogen-containing heterocyclic group is bonded to the -N=N- group.

The azo dye further comprises a pyrazole ring bonded to at least one nitrogen atom of the -N=N- group, and the pyrazole ring may be formed by Q in the general formula (I-1) or (I-3), or may be the pyrazole ring in the general formula (I-2).

The azo dye used in the optical information recording medium is described below.

The azo dye used in the present invention has an -N=N-group and a nitrogen-containing heterocyclic group bonded to one nitrogen atom thereof, and contains no metal atoms or metal ions in the molecule. The nitrogen-containing heterocyclic group is represented by one of the following general formulae (I-1) to (I-3). By using the azo dye, a stable dye film with excellent light fastness can be easily formed on the optical information recording medium, and the medium can show excellent recording properties.

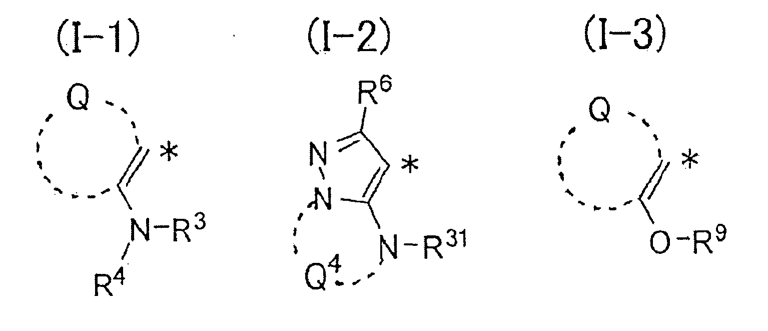

The general formula (I-1) is described below. In the general formula (I-1), Q represents a group forming a nitrogen-containing heterocycle. Q, R³, and R⁴ in the general formula (I-1) have the same meanings and preferred embodiments as those in the general formula (1) to be hereinafter described.

The general formula (I-2) is described below. In the general formula (I-2), Q⁴ represents a group for connecting the adjacent nitrogen atoms, to form a nitrogen-containing heterocycle. The heterocycle formed by Q⁴ is preferably a 5- to 7-membered ring, more preferably a 5- or 6-membered ring, though not restrictive.

R⁶ and R³¹ in the general formula (I-2) have the same meanings and preferred embodiments as those in the general formula (3) to be hereinafter described.

The general formula (I-3) is described below. Q in the general formula (I-3) has the same meanings and preferred embodiments as those in the general formula (I-1). R⁹ in the general formula (I-3) have the same meanings and preferred embodiments as those in the general formula (9) to be hereinafter described. The asterisk * represents a position at which the nitrogen-containing heterocyclic group is bonded to the -N=N- group.

The azo dye is preferably represented by the general formula (1), (2), (3), (4), (5), (6), (7), (8), or (9), and more preferably represented by the general formula (1), (2), (3), (4), (5), (6), (7), or (8).

It is more preferred that, in the azo dye used in the present invention, the nitrogen-containing heterocyclic group represented by one of the general formulae (I-1) to (I-3) is bonded to one nitrogen atom of the -N=N- group, and a pyrazole ring is bonded to the other nitrogen atom.

The general formula (1) is described below.

### General formula (1):

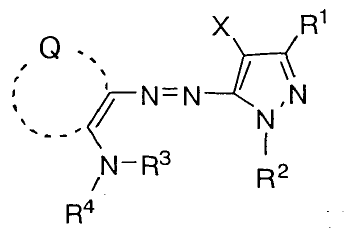

Q represents a group forming a substituted or unsubstituted, nitrogen-containing heterocycle. The nitrogen-containing heterocycle formed by Q is not particularly limited, and may be a pyrazole ring, a pyrrole ring, an imidazole ring, a thiazole ring, an oxazole ring, a pyrroline ring, a pyridine ring, a pyrazine ring, a pyrimidine ring, a pyridazine ring, a 1,2,4-triazine ring, etc. These rings may form a condensed ring.

The nitrogen-containing heterocycle formed by Q is preferably a pyrazole ring, an imidazole ring, a thiazole ring, an oxazole ring, or a pyridine ring, more preferably a pyrazole ring or a pyridine ring, further preferably a pyrazole ring.

Q preferably has a substituent. The substituent on Q is not particularly limited, and examples thereof are the same as those of R¹ to R⁴.

The substituent on Q is preferably an alkyl group, which preferably has 1 to 30 carbon atoms, more preferably has 1 to 20 carbon atoms, and particularly preferably has 1 to 10 carbon atoms, such as methyl, ethyl, iso-propyl, tert-butyl, n-octyl, n-decyl, n-hexadecyl, cyclopropyl, cyclopentyl, or cyclohexyl group.

The Hammett's substituent constant σp used in the present invention is described below.

The Hammett rule is an empirical rule proposed by L. P. Hammett in 1935 to quantitatively treat effects of substituents on reactions or equilibriums of benzene derivatives. The Hammett rule is widely considered to be appropriate nowadays. Substituent constants σp and σm are used in the Hammett rule. The values of the substituent constants σp and σm can be found in many common books, and are described in detail in, for example, Lange's Handbook of Chemistry, edited by J. A. Dean, 12th edition, 1979, McGraw-Hill, and Kagaku no Ryoiki, Zokan (Journal of Japanese Chemistry, Extra Edition), No. 122, page 96 to 103, 1979, Nanko-do. In the present invention, the Hammett's substituent constant σp is used to make a restriction and an explanation. Of course the restriction and explanation are applied not only to substituents having known constants σp described in the above books, but also to substituents having constants σp, which can be determined under the Hammett rule though unknown in the literature.

X represents an electron attractive group having a Hammett's substituent constant σp of 0.20 or more. The electron attractive group preferably has a constant σp of 0.30 or more and 1.0 or less. Specific examples of the electron attractive groups X with a constant σp of 0.20 or more include acyl groups, acyloxy groups, carbamoyl groups, alkyloxycarbonyl groups, aryloxycarbonyl groups, a cyano group, a nitro group, dialkylphosphono groups, diarylphosphono groups, diarylphosphinyl groups, alkylsulfinyl groups, arylsulfinyl groups, alkylsulfonyl groups, arylsulfonyl groups, sulfonyloxy groups, acylthio groups, sulfamoyl groups, thiocyanate groups, thiocarbonyl groups, halogenated alkyl groups, halogenated alkoxy groups, halogenated aryloxy groups, halogenated alkylamino groups, halogenated alkylthio groups, aryl groups having a substituent of an electron attractive group with a constant σp of 0.20 or more, heterocyclic groups, halogen atoms, diazenyl groups, and selenocyanate groups.

X may have a substituent, and examples thereof include halogen atoms such as chlorine and bromine atoms; linear or branched alkyl groups having 1 to 12 carbon atoms, aralkyl groups having 7 to 18 carbon atoms, alkenyl groups having 2 to 12 carbon atoms, linear or branched alkynyl groups having 2 to 12 carbon atoms, liner or branched cycloalkyl groups having 3 to 12 carbon atoms, and liner or branched cycloalkenyl groups having 3 to 12 carbon atoms, such as methyl, ethyl, propyl, isopropyl, t-butyl, 2-methanesulfonylethyl, 3-phenoxypropyl, trifluoromethyl, and cyclopentyl groups; aryl groups such as phenyl, 4-t-butylphenyl, and 2,4-di-t-amylphenyl groups; heterocyclic groups such as imidazolyl, pyrazolyl, triazolyl, 2-furyl, 2-thienyl, 2-pyrimidinyl, and 2-benzothiazolyl groups; a cyano group; a hydroxyl group; a nitro group; a carboxyl group; amino groups; alkyloxy groups such as methoxy, ethoxy, 2-methoxyethoxy, and 2-methanesulfonylethoxy groups; aryloxy groups such as phenoxy, 2-methylphenoxy, 4-t-butylphenoxy, 3-nitrophenoxy, 3-t-butyloxycarbamoylphenoxy, and 3-methoxycarbamoyl groups; acylamino groups such as acetoamide, benzamide, and 4-(3-t-butyl-4-hydroxyphenoxy)butaneamide groups; alkylamino groups such as methylamino, butylamino, diethylamino, and methylbutylamino groups; anilino groups such as phenylamino and 2-chloroanilino groups; ureido groups such as phenylureido, methylureido, and N,N-dibutylureido groups; sulfamoylamino groups such as an N,N-dipropylsulfamoylamino group; alkylthio groups such as methylthio, octylthio, and 2-phenoxyethylthio groups; arylthio groups such as phenylthio, 2-butoxy-5-t-octylphenylthio, and 2-carboxyphenylthio groups; alkyloxycarbonylamino groups such as a methoxycarbonylamino group; sulfonamide groups such as methanesulfonamide, benzenesulfonamide, p-toluenesulfonamide, and octadecanesulfonamide groups; carbamoyl groups such as N-ethylcarbamoyl and N,N-dibutylcarbamoyl groups; sulfamoyl groups such as N-ethylsulfamoyl, N,N-dipropylsulfamoyl, and N,N-diethylsulfamoyl groups; sulfonyl groups such as methanesulfonyl, octanesulfonyl, benzenesulfonyl, and toluenesulfonyl groups; alkyloxycarbonyl groups such as methoxycarbonyl and butyloxycarbonyl groups; heterocyclyloxy groups such as 1-phenyltetrazole-5-oxy and 2-tetrahydropyranyloxy groups; azo groups such as phenyl azo, 4-methoxyphenylazo, 4-pivaloylaminophenylazo, and 2-hydroxy-4-propanoylphenylazo groups; acyloxy groups such as an acetoxy group; carbamoyloxy groups such as N-methylcarbamoyloxy and N-phenylcarbamoyloxy groups; silyloxy groups such as trimethylsilyloxy and dibutylmethylsilyloxy groups; aryloxycarbonylamino groups such as a phenoxycarbonylamino group; imide groups such as N-succinimide and N-phthalimide groups; heterocyclylthio groups such as 2-benzothiazolylthio, 2,4-di-phenoxy-1,3,5-triazole-6-thio, and 2-pyridylthio groups; sulfinyl groups such as a 3-phenoxypropylsulfinyl group; phosphonyl groups such as phenoxyphosphonyl, octyloxyphosphonyl, and phenylphosphonyl groups; aryloxycarbonyl groups such as a phenoxycarbonyl group; and acyl groups such as acetyl, 3-phenylpropanoyl, and benzoyl groups.

X is preferably an acyl group having 2 to 12 carbon atoms, an acyloxy group having 2 to 12 carbon atoms, a carbamoyl group having 1 to 12 carbon atoms, an alkyloxycarbonyl group having 2 to 12 carbon atoms, an aryloxycarbonyl group having 7 to 18 carbon atoms, a cyano group, a nitro group, an alkylsulfinyl group having 1 to 12 carbon atoms, an arylsulfinyl group having 6 to 18 carbon atoms, an alkylsulfonyl group having 1 to 12 carbon atoms, an arylsulfonyl group having 6 to 18 carbon atoms, a sulfamoyl group having 0 to 12 carbon atoms, a halogenated alkyl group having 1 to 12 carbon atoms, a halogenated alkyloxy group having 1 to 12 carbon atoms, a halogenated alkylthio group having 1 to 12 carbon atoms, a halogenated aryloxy group having 7 to 18 carbon atoms, an aryl group having 7 to 18 carbon atoms and two or more substituents of electron attractive groups having a constant σp of 0.20 or more, or a heterocyclic group having 1 to 18 carbon atoms and a nitrogen, oxygen, or sulfur atom.

X is more preferably an alkyloxycarbonyl group having 2 to 12 carbon atoms, a nitro group, a cyano group, an alkylsulfonyl group having 1 to 12 carbon atoms, an arylsulfonyl group having 6 to 18 carbon atoms, a carbamoyl group having 1 to 12 carbon atoms, or a halogenated alkyl group having 1 to 12 carbon atoms. X is particularly preferably a cyano group, an alkylsulfonyl group having 1 to 12 carbon atoms, or an arylsulfonyl group having 6 to 18 carbon atoms, most preferably a cyano group.

The constant op of X within the above-described range is preferred from the viewpoint of synthesis (activity in a pyrazole ring forming reaction). Thus, the pyrazole ring having X with the above constant σp can be easily obtained, and is preferably used in the present invention. The pyrazole ring may be formed by a method of the formula IIa described in Japanese Laid-Open Patent Publication No. 61-36362, etc. Further, the above constant σp is preferred also from the viewpoint of the light fastness. Thus, it is considered that the oxidation potential of the azo dye is reduced under the condition of the constant σp, whereby the singlet oxygen resistance and the ozone resistance of the azo dye is increased to improve the light fastness.

R¹ to R⁴ independently represent a hydrogen atom or a substituent. The substituent of R¹ to R⁴ is not particularly limited, and examples thereof include alkyl groups, preferably having 1 to 30 carbon atoms, more preferably having 1 to 20 carbon atoms, particularly preferably having 1 to 10 carbon atoms, such as methyl, ethyl, iso-propyl, tert-butyl, n-octyl, n-decyl, n-hexadecyl, cyclopropyl, cyclopentyl, and cyclohexyl groups; alkenyl groups, preferably having 2 to 30 carbon atoms, more preferably having 2 to 20 carbon atoms, particularly preferably having 2 to 10 carbon atoms, such as vinyl, allyl, 2-butenyl, and 3-pentenyl groups; alkynyl groups, preferably having 2 to 30 carbon atoms, more preferably having 2 to 20 carbon atoms, particularly preferably having 2 to 10 carbon atoms, such as propargyl and 3-pentynyl groups; aryl groups, preferably having 6 to 30 carbon atoms, more preferably having 6 to 20 carbon atoms, particularly preferably having 6 to 12 carbon atoms, such as phenyl, p-methylphenyl, naphtyl, anthranil, pyridyl, thiazole, oxazole, and triazole groups; acyl groups, preferably having 1 to 30 carbon atoms, more preferably having 1 to 20 carbon atoms, particularly preferably having 1 to 12 carbon atoms, such as acetyl, benzoyl, formyl, pivaloyl, and trifluoromethylcarbonyl groups; alkylsulfonyl groups, preferably having 1 to 30 carbon atoms, more preferably having 1 to 20 carbon atoms, particularly preferably having 1 to 12 carbon atoms, such as methanesulfonyl and trifluoromethanesulfonyl groups; arylsulfonyl groups, preferably having 1 to 30 carbon atoms, more preferably having 1 to 20 carbon atoms, particularly preferably having 1 to 12 carbon atoms, such as a phenylsulfonyl group; alkoxycarbonyl groups, preferably having 2 to 30 carbon atoms, more preferably having 2 to 20 carbon atoms, particularly preferably having 2 to 12 carbon atoms, such as methoxycarbonyl and ethoxycarbonyl groups; aminocarbonyl groups, preferably having 2 to 30 carbon atoms, more preferably having 2 to 20 carbon atoms, particularly preferably having 2 to 12 carbon atoms, such as N,N-dimethylaminocarbonyl and N,N-diethylcarbonyl groups; aryloxycarbonyl groups, preferably having 7 to 30 carbon atoms, more preferably having 7 to 20 carbon atoms, particularly preferably having 7 to 12 carbon atoms, such as a phenyloxycarbonyl group; alkoxysulfonyl groups, preferably having 2 to 30 carbon atoms, more preferably having 2 to 20 carbon atoms, particularly preferably having 2 to 12 carbon atoms, such as methoxysulfonyl and ethoxysulfonyl groups; aminosulfonyl groups, preferably having 2 to 30 carbon atoms, more preferably having 2 to 20 carbon atoms, particularly preferably having 2 to 12 carbon atoms, such as N,N-dimethylaminosulfonyl and N,N-diethylamino sulfonyl groups; nonaromatic heterocyclic groups, preferably having 1 to 30 carbon atoms, more preferably having 1 to 12 carbon atoms, containing a heteroatom of nitrogen, oxygen, sulfur, etc., such as piperidyl and morpholino groups; and silyl groups, preferably having 3 to 40 carbon atoms, more preferably having 3 to 30 carbon atoms, particularly preferably having 3 to 24 carbon atoms, such as trimethylsilyl and triphenylsilyl groups. These groups may further have a substituent.

R¹ is preferably a hydrogen atom, an alkyl group, or an aryl group, more preferably a hydrogen atom or an alkyl group. The alkyl group is preferably an iso-propyl group, a sec-butyl group, a tert-butyl group, a cyclopropyl group, a cyclopentyl group, or a cyclohexyl group, more preferably an iso-propyl group, a sec-butyl group, or a tert-butyl group, further preferably a tert-butyl group from the viewpoint of solubility and film stability.

R² is preferably an alkyl group, an aryl group, an acyl group, an alkoxycarbonyl group, an aminocarbonyl group, or an alkylsulfonyl group, more preferably an aryl group, an alkoxycarbonyl group, or an aminocarbonyl group, further preferably an aryl group or an aminocarbonyl group. The aryl group is preferably a phenyl group, a pyridyl group, a benzothiazolyl group, or a triazinyl group, more preferably a phenyl group or a pyridyl group, further preferably a phenyl group.

Each of R³ and R⁴ is preferably a hydrogen atom, an alkyl group, or an aryl group, more preferably a hydrogen atom.

The general formula (2) is described below.

### General formula (2):

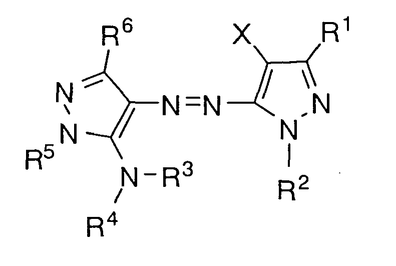

X in the general formula (2) has the same meanings and preferred embodiments as those in the general formula (1).

R¹ to R⁴ in the general formula (2) have the same meanings and preferred embodiments as those in the general formula (1).

R⁵ has the same meanings as R², and is preferably an alkyl group, an aryl group, an acyl group, or an alkylsulfonyl group, more preferably an alkyl group or an aryl group, further preferably an alkyl group. R⁵ is not bonded to R⁴.

R⁶ represents a hydrogen atom or a substituent, and examples of the substituents may be the same as those of R¹. The substituent is preferably an alkyl group, an aryl group, an acyl group, an alkoxycarbonyl group, or an alkylsulfonyl group, more preferably an alkyl group or an aryl group, further preferably an alkyl group. The alkyl group is preferably a tertiary alkyl group, particularly preferably a tert-butyl group.

Specific examples of the azo dyes represented by the general formula (2), included in the azo dyes represented by the general formula (1), are illustrated below without intention of restricting the scope of the present invention.

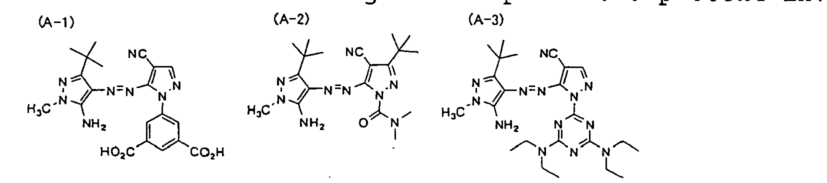

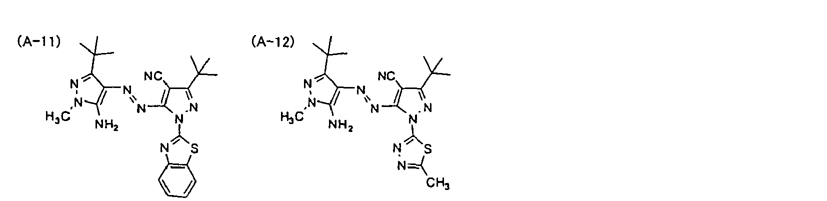

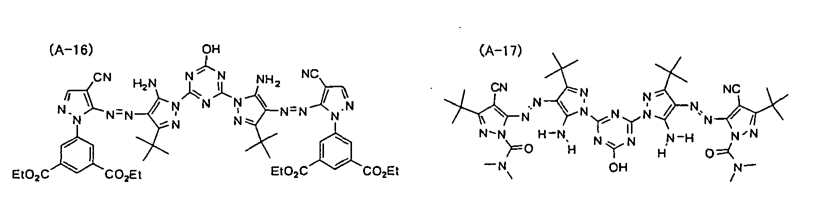

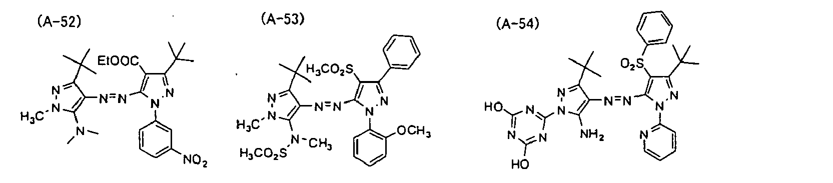

Specific examples of the azo dyes represented by the general formula (1), not represented by the general formula (2), are illustrated below without intention of restricting the scope of the present invention.

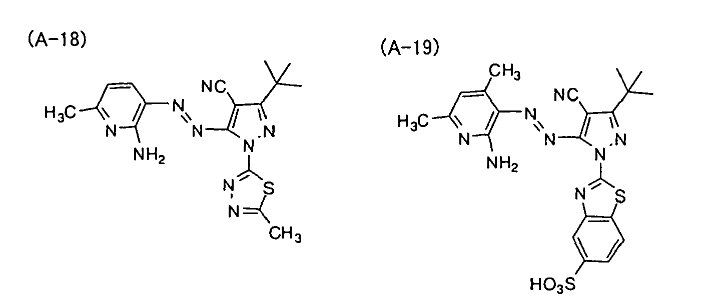

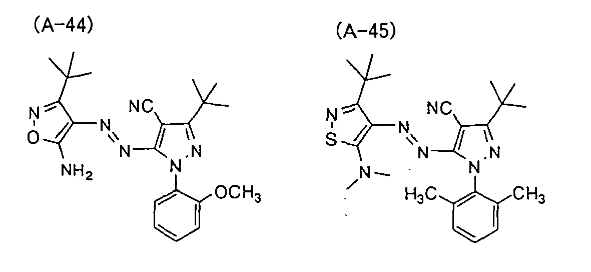

The general formula (3) is described below.

### General formula (3):

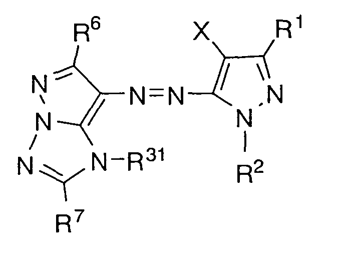

X in the general formula (3) has the same meanings and preferred embodiments as those in the general formula (1).

R¹, R², and R⁶ in the general formula (3) have the same meanings and preferred embodiments as above.

R⁷ represents a hydrogen atom or a substituent, and is preferably a substituent. The substituent is not particularly limited, and examples thereof may be the same as those of R¹. The substituent is preferably an alkyl group or an aryl group, more preferably an alkyl group.

R³¹ represents a monovalent substituent. The monovalent substituent is not particularly limited, and examples thereof may be the same as those of R¹. The monovalent substituent is preferably an alkyl group, an acyl group, an alkoxycarbonyl group, an alkylaminocarbonyl group, or an alkylsulfonyl group, more preferably an alkyl group or an acyl group, further preferably an alkyl group. R³¹ acts to reduce the hydrazone form in the azo-hydrazone tautomeric equilibrium, thereby improving the light fastness.

Specific examples of the azo dyes represented by the general formula (3) are illustrated below without intention of restricting the scope of the present invention.

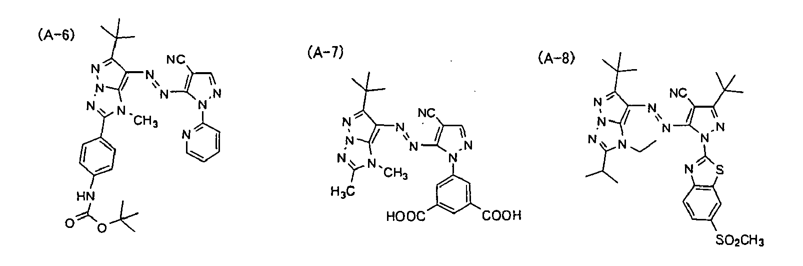

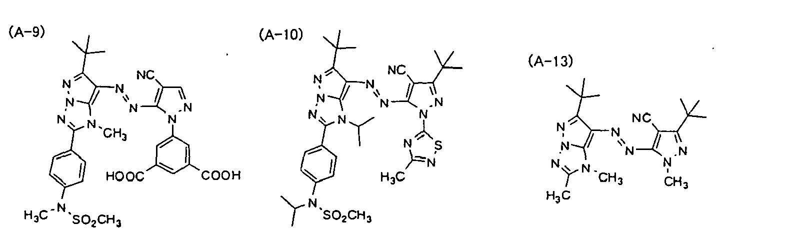

The general formula (4) is described below.

### General formula (4):

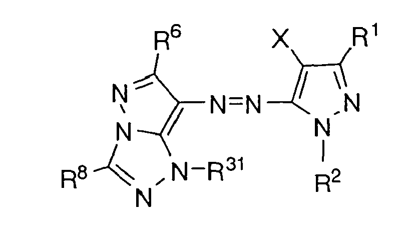

X in the general formula (4) has the same meanings and preferred embodiments as those in the general formula (1).

R¹, R², and R⁶ in the general formula (4) have the same meanings and preferred embodiments as above.

R⁸ in the general formula (4) has the same meanings and preferred embodiments as R⁷.

R³¹ in the general formula (4) has the same meanings and preferred embodiments as those in the general formula (3).

Specific examples of the azo dyes represented by the general formula (4) are illustrated below without intention of restricting the scope of the present invention.

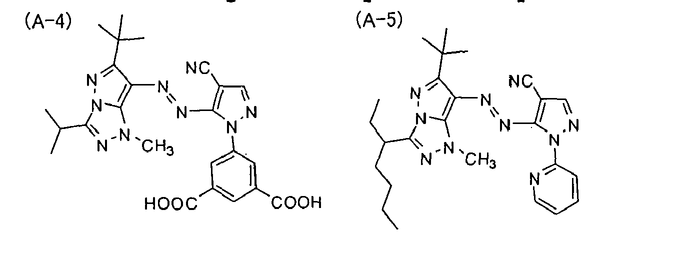

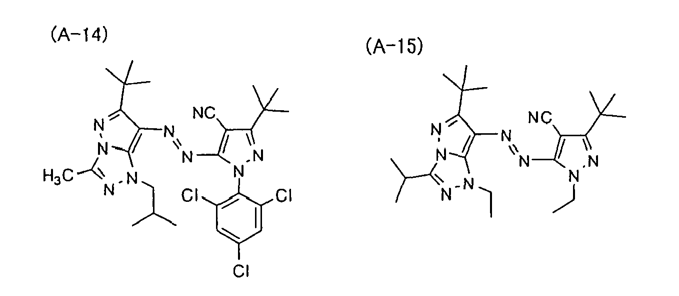

The general formula (5) is described below. R¹, R², R³, R⁴, and R⁵ in the general formula (5) have the same meanings and preferred embodiments as above.

### General formula (5):

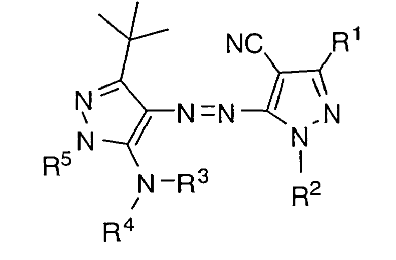

The general formula (6) is described below.

### General formula (6):

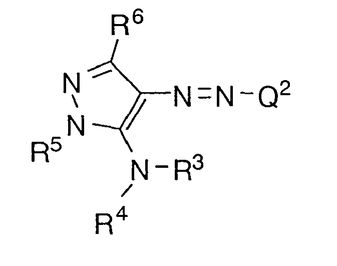

R³ to R⁶ in the general formula (6) have the same meanings and preferred embodiments as above.

Q² represents a nitrogen-containing heterocyclic group other than pyrazole groups. The nitrogen-containing heterocyclic group of Q² is not particularly limited, and may contain a pyrrole ring, an imidazole ring, a thiazole ring, an oxazole ring, a thiadiazole ring, an oxadiazole ring, a triazole ring, a pyrroline ring, a pyridine ring, a pyrazine ring, a pyrimidine ring, a pyridazine ring, or a 1,2,4-triazine ring, etc. These rings may form a condensed ring.

The nitrogen-containing heterocyclic group of Q² preferably contains an imidazole ring, a thiazole ring, an oxazole ring, a thiadiazole ring, an oxadiazole ring, a triazole ring, or a pyridine ring, more preferably contains an imidazole ring, a thiazole ring, a thiadiazole ring, or a triazole ring, further preferably contains an imidazole ring or a thiadiazole ring. The thiadiazole ring may be preferably a 1,2,4- or 1,3,4-thiadiazole ring. The thiadiazole ring may have a substituent, which is not particularly limited, and examples thereof may be the same as those of R¹. The substituent may be an alkoxy group, a thioalkoxy group, a phenoxy group, a thiophenoxy group, etc., and is preferably an alkyl group or a thioalkoxy group. Each of the imidazole ring and the thiazole ring may have a substituent, and preferably has at least one cyano group on the carbon atom in the ring from the viewpoint of light fastness.

Specific examples of the azo dyes represented by the general formula (6) are illustrated below without intention of restricting the scope of the present invention.

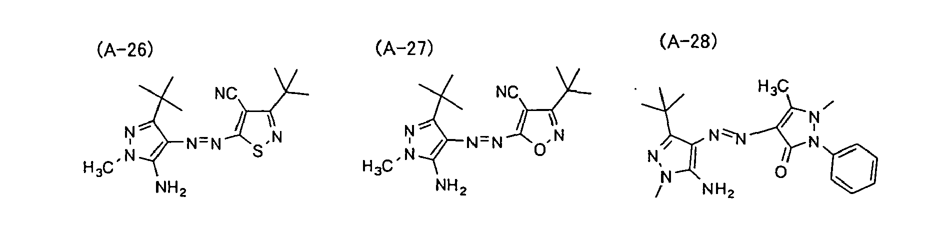

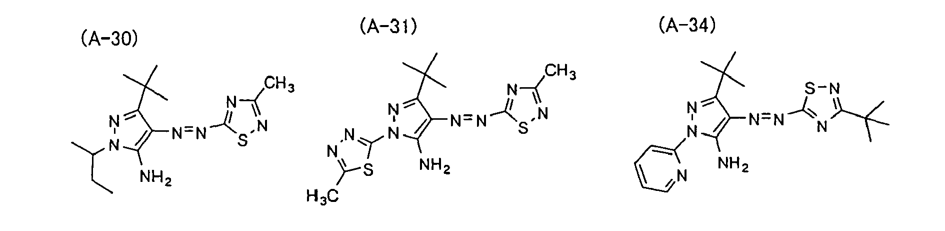

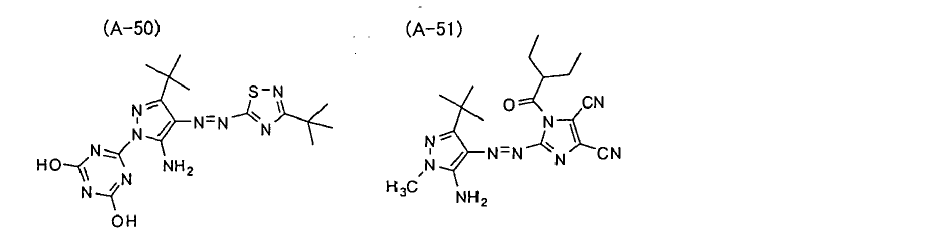

The general formula (7) is described below.

### General formula (7):

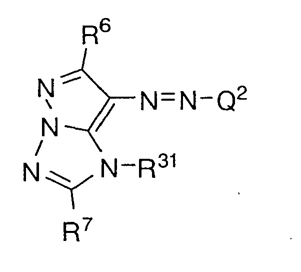

Q² in the general formula (7) has the same meanings and preferred embodiments as those in the general formula (6).

R⁶ and R⁷ in the general formula (7) have the same meanings and preferred embodiments as above.

R³¹ in the general formula (7) has the same meanings and preferred embodiments as above.

Specific examples of the azo dyes represented by the general formula (7) are illustrated below without intention of restricting the scope of the present invention.

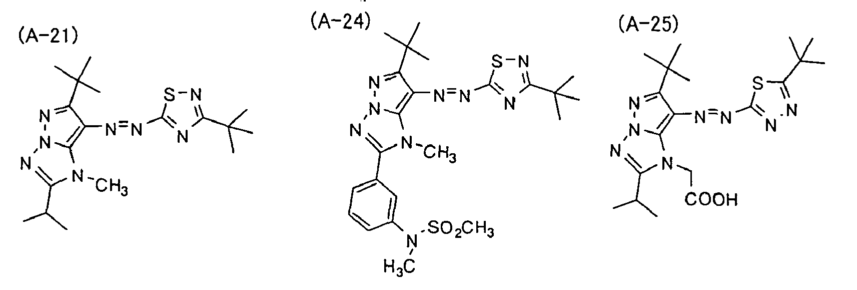

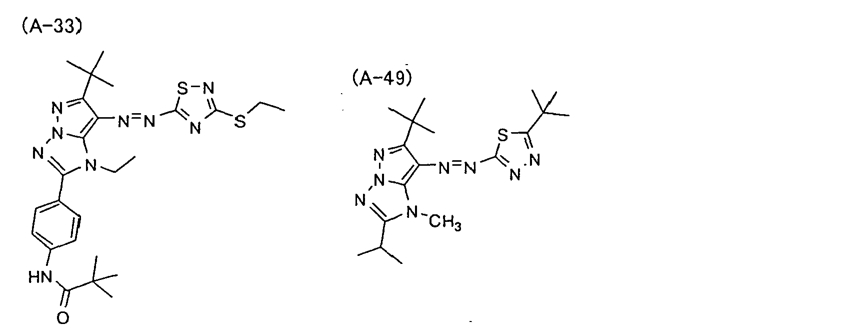

The general formula (8) is described below.

### General formula (8):

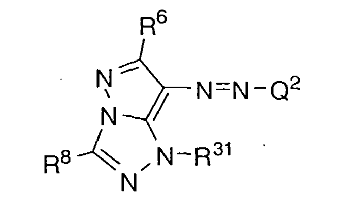

Q² in the general formula (8) has the same meanings and preferred embodiments as those in the general formula (6).

R⁶ and R⁸ in the general formula (8) have the same meanings and preferred embodiments as above.

R³¹ in the general formula (8) has the same meanings and preferred embodiments as above.

Specific examples of the azo dyes represented by the general formula (8) are illustrated below without intention of restricting the scope of the present invention.

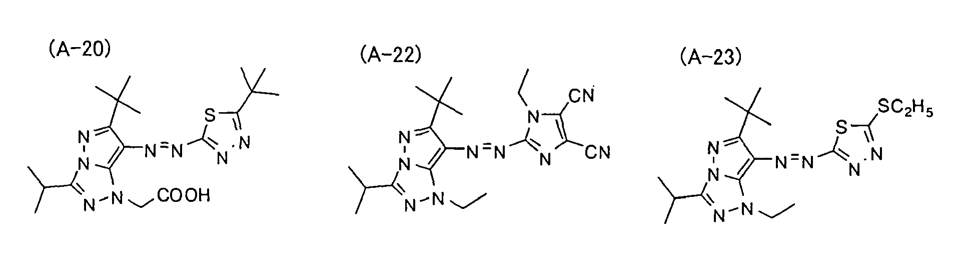

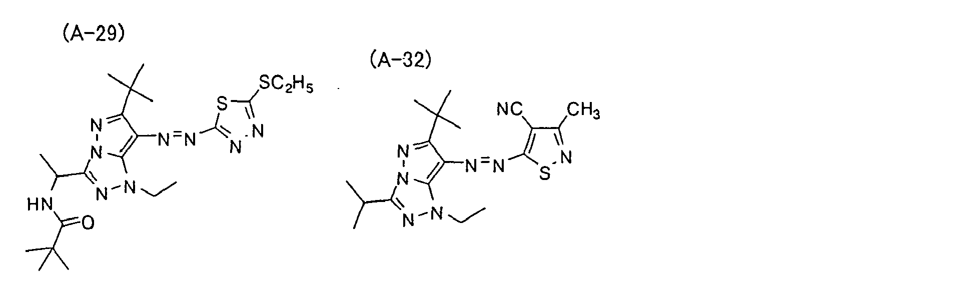

The general formula (9) is described below.

### General formula (9):

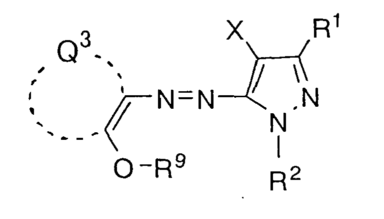

X in the general formula (9) has the same meanings and preferred embodiments as those in the general formula (1).

R¹ and R² in the general formula (9) have the same meanings and preferred embodiments as above.

Q³ represents a group forming a nitrogen-containing heterocycle. The nitrogen-containing heterocyclic group formed by Q³ is not particularly limited, and for example, contains a pyrazole ring, a pyrrole ring, an imidazole ring, a thiazole ring, an oxazole ring, a pyrroline ring, a pyridine ring, a pyrazine ring, a pyrimidine ring, a pyridazine ring, a 1,2,4-triazine ring, or a ring forming a moiety represented by one of the following formulae (C-1) to (C-4), in which each asterisk * represents a position at which the group is bonded to the -N=N- group. These rings may form a condensed ring.

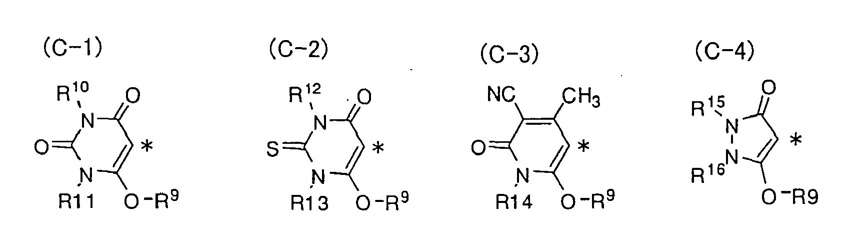

The nitrogen-containing heterocyclic group formed by Q³ preferably contains the moiety represented by one of the formulae (C-1) to (C-4), more preferably contains the moiety represented by one of the formulae (C-1) to (C-3), further preferably contains the moiety represented by one of the formulae (C-1) and (C-3), and particularly preferably contains the moiety represented by the formula (C-3).

R⁹ represents a hydrogen atom or a substituent, and examples of the substituents may be the same as those of R¹ to R⁴. The substituent is preferably an alkyl group, more preferably a methyl group or an ethyl group.

R¹⁰ to R¹⁶ in the formulae (C-1) to (C-4) have the same meanings and preferred embodiments as R⁷.

Specific examples (A-35) to (A-43) of the azo dyes represented by the general formula (9) are illustrated below without intention of restricting the scope of the present invention.

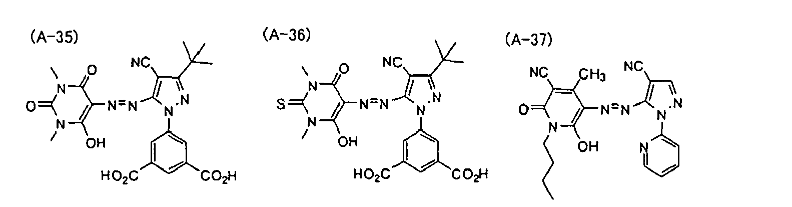

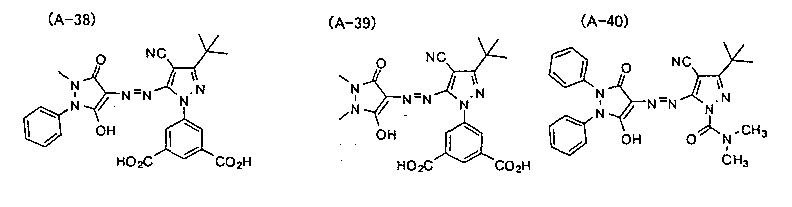

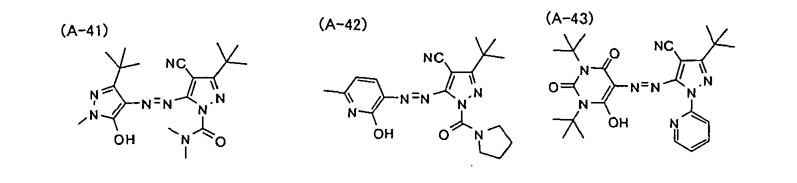

The azo dye of the present invention preferably has a caiboxylate residue in a part of the substituents thereof, whereby recording/reproducing properties are remarkably improved.

The concentration of the dye compound, specifically the azo dye, in a coating liquid is generally 0.01% to 15% by mass, preferably 0.1% to 10% by mass, more preferably 0.5% to 5% by mass, most preferably 0.5% to 3% by mass.

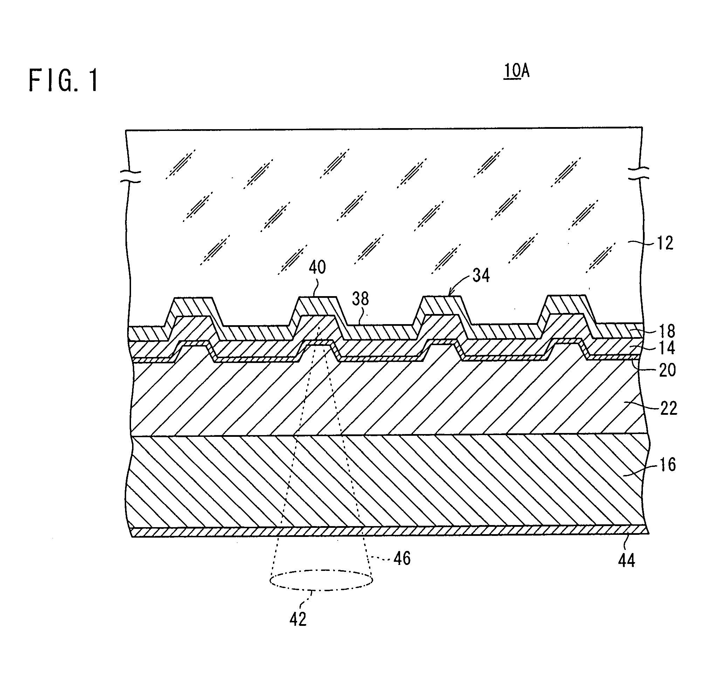

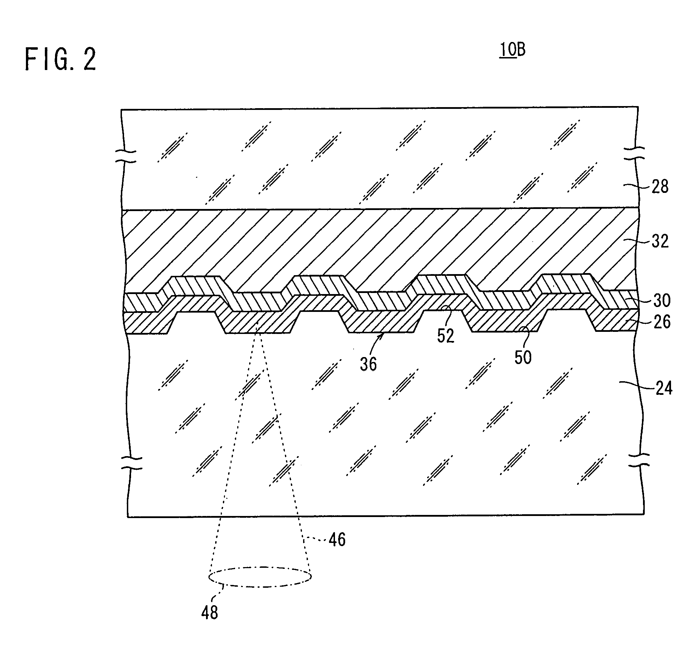

Then, the structure of the optical information recording medium according to the present invention is described in detail below with reference to FIGS. 1 and 2.

The optical information recording medium of the present invention is preferably an optical information recording medium shown in FIG. 1 according to a first embodiment (hereinafter referred to as the first optical information recording medium 10A), or an optical information recording medium shown in FIG. 2 according to a second embodiment (hereinafter referred to as the second optical information recording medium 10B).

As shown in FIG. 1, the first optical information recording medium 10A has a dye-containing, first WORM-type recording layer 14 and a cover layer 16 having a thickness of 0.01 to 0.5 mm, formed in this order on a first substrate 12 having a thickness of 0.7 to 2 mm. Specifically, for example, a first light reflection layer 18, the first WORM-type recording layer 14, a barrier layer 20, a first adhesion layer 22, and the cover layer 16 are disposed in this order on the first substrate 12.

As shown in FIG. 2, the second optical information recording medium 10B has a dye-containing, second WORM-type recording layer 26 and a protective substrate 28 having a thickness of 0.1 to 1.0 mm, formed in this order on a second substrate 24 having a thickness of 0.1 to 1.0 mm. Specifically, for example, the second WORM-type recording layer 26, a second light reflection layer 30, a second adhesion layer 32, and the protective substrate 28 are disposed in this order on the second substrate 24.

In the first optical information recording medium 10A shown in FIG. 1, it is preferred that the first substrate 12 has first pregrooves 34 with a track pitch of 50 to 500 nm, a groove width of 25 to 250 nm, and a groove depth of 5 to 150 nm.

In the second optical information recording medium 10B shown in FIG. 2, it is preferred that the second substrate 24 has second pregrooves 36 with a track pitch of 200 to 600 nm, a groove width of 50 to 300 nm, a groove depth of 30 to 150 nm, and a wobble amplitude of 5 to 50 nm.

The first optical information recording medium 10A has at least the first substrate 12, the first WORM-type recording layer 14, and the cover layer 16 as shown in FIG. 1, and first the essential members are described below.

### [First substrate 12 of first optical information recording medium 10A]

As shown in FIG. 1, the first substrate 12 of the first optical information recording medium 10A preferably has the first pregrooves 34 (guide grooves) with particular track pitch, groove width (half width), groove depth, and wobble amplitude to be hereinafter described. The first pregrooves 34 are formed in order to achieve a recording density higher than those of CD-R and DVD-R, and are suitable for media using bluish purple laser lights, etc.

The track pitch of the first pregrooves 34 is 50 to 500 nm. The track pitch is preferably 420 nm or less, more preferably 370 nm or less, further preferably 330 nm or less. Further, the track pitch is preferably 100 nm or more, more preferably 200 nm or more, further preferably 260 nm or more. When the track pitch is less than 50 nm, it is difficult to form the first pregrooves 34 accurately, and disadvantageous crosstalk is often caused. When the track pitch is more than 500 nm, the recording density is reduced in some cases.

The groove width (the half width) of each groove portion 40 (each concave portion) in the first pregrooves 34 of the first substrate 12 is 25 to 250 nm. The groove width is preferably 240 nm or less, more preferably 230 nm or less, further preferably 220 nm or less. Further, the groove width of the first pregroove 34 is preferably 50 nm or more, more preferably 80 nm or more, further preferably 100 nm or more. When the groove width is less than 25 nm, the groove may be insufficiently transferred in a forming process, and the error rate may be increased in a recording process. When the groove width is more than 250 nm, the groove may insufficiently be transferred in a forming process, and a pit formed in a recording process may be expanded to cause crosstalk.

The groove depth of each first pregroove 34 is 5 to 150 nm. The groove depth is preferably 85 nm or less, more preferably 80 nm or less, further preferably 75 nm or less. Further, the groove depth is preferably 10 nm or more, more preferably 20 nm or more, further preferably 28 nm or more. When the groove depth of the first pregroove 34 is less than 5 nm, a sufficient recording modulation cannot be obtained in some cases. When the groove depth is more than 150 nm, the reflectance may be largely reduced.

The groove inclination angle of each first pregroove 34 is preferably 80° or less, more preferably 75° or less, further preferably 70° or less, particularly preferably 65° or less. Further, the groove inclination angle is preferably 20° or more, more preferably 30° or more, further preferably 40° or more. When the groove inclination angle of the first pregroove 34 is less than 20°, a sufficient tracking error signal amplitude cannot be obtained in some cases. When the groove inclination angle is more than 80°, the formation of the first pregroove 34 becomes difficult.

The first substrate 12 of the first optical information recording medium 10A may contain a material selected from various conventional substrate materials for optical information recording media.

Specific examples of such materials include glasses; polycarbonates; acrylic resins such as polymethyl methacrylates; vinyl chloride resins such as polyvinyl chlorides and vinyl chloride copolymers; epoxy resins; amorphous polyolefins; polyesters; and metals such as aluminum. These materials may be used in combination.

In view of moisture resistance, dimension stability, low costs, etc., preferred among the materials are thermoplastic resins such as amorphous polyolefins and polycarbonates, particularly polycarbonates. In the case of using the above-mentioned resin, the first substrate 12 can be prepared by injection forming.

The thickness of the first substrate 12 is 0.7 to 2 mm, preferably 0.9 to 1.6 mm, more preferably 1.0 to 1.3 mm.

An undercoat layer is preferably formed on a surface of the first substrate 12, on which the first light reflection layer 18 to be hereinafter described is formed, to improve flatness and adhesion.

Examples of materials of the undercoat layer include polymers such as polymethyl methacrylates, acrylic acid-methacrylic acid copolymers, styrene-maleic anhydride copolymers, polyvinyl alcohols, N-methylolacrylamides, styrene-vinyltoluene copolymers, chlorosulfonated polyethylenes, nitrocelluloses, polyvinyl chlorides, chlorinated polyolefins, polyesters, polyimides, vinyl acetate-vinyl chloride copolymers, ethylene-vinyl acetate copolymers, polyethylenes, polypropylenes, and polycarbonates, and surface modifying agents such as silane coupling agents.

The undercoat layer may be formed by dissolving or dispersing the material in an appropriate solvent, and by applying thus-obtained coating liquid to the first substrate 12 by a coating method such as spin coating, dip coating, or extrusion coating. The thickness of the undercoat layer is generally 0.005 to 20 µm, preferably 0.01 to 10 µm.

### [First WORM-type recording layer 14 of first optical information recording medium 10A]

The first WORM-type recording layer 14 of the first optical information recording medium 10A is preferably formed by the steps of dissolving a dye in a solvent together with a binder, etc. to prepare a coating liquid, applying the coating liquid to the substrate or the first light reflection layer 18, and drying the applied coating film. The first WORM-type recording layer 14 may have a single- or multi-layer structure, and the step of applying a coating liquid is repeatedly carried out to form such a multilayer structure.

The concentration of the dye in the coating liquid is generally 0.01% to 15% by mass, preferably 0.1% to 10% by mass, more preferably 0.5% to 5% by mass, most preferably 0.5% to 3% by mass.

Examples of the solvents for preparing the coating liquid include esters such as butyl acetate, ethyl lactate, and cellosolve acetate; ketones such as methyl ethyl ketone, cyclohexanone, and methyl isobutyl ketone; chlorinated hydrocarbons such as dichloromethane, 1,2-dichloroethane, and chloroform; amides such as dimethylformamide; hydrocarbons such as methylcyclohexane; ethers such as tetrahydrofuran, ethyl ether, and dioxane; alcohols such as ethanol, n-propanol, isopropanol, n-butanol, and diacetone alcohol; fluorine-containing solvents such as 2,2,3,3-tetrafluoro-1-propanol; and glycol ethers such as ethylene glycol monomethyl ether, ethylene glycol monoethyl ether, and propylene glycol monomethyl ether.

The solvents may be used singly or as a mixture of two or more in view of the solubility of the dye. Various additives such as antioxidants, UV absorbers, plasticizers, and lubricants may be added to the coating liquid in accordance with the purpose.

Examples of methods for applying the coating liquid include spray methods, spin coating methods, dipping methods, roll coating methods, blade coating methods, doctor roll methods, and screen printing methods.

In the applying step, the temperature of the coating liquid is preferably 23°C to 50°C, more preferably 24°C to 40°C.

On a land 38 (a convex portion of the first substrate 12), the thickness of the first WORM-type recording layer 14 is preferably 300 nm or less, more preferably 250 nm or less, further preferably 200 nm or less, particularly preferably 180 nm or less. Further, the thickness is preferably 1 nm or more, more preferably 3 nm or more, further preferably 5 nm or more, particularly preferably 7 nm or more.

On a groove portion 40 (a concave portion of the first substrate 12), the thickness of the first WORM-type recording layer 14 is preferably 400 nm or less, more preferably 300 nm or less, further preferably 250 nm or less. Further, the thickness is preferably 10 nm or more, more preferably 20 nm or more, further preferably 25 nm or more.

The ratio of the thickness of the first WORM-type recording layer 14 on the land 38 to the thickness of the first WORM-type recording layer 14 on the groove portion 40 is preferably 0.1 or more, more preferably 0.13 or more, further preferably 0.15 or more, particularly preferably 0.17 or more. The ratio is preferably less than 1, more preferably 0.9 or less, further preferably 0.85 or less, particularly preferably 0.8 or less.

In a case where the coating liquid contains a binder, examples of the binder include natural organic high-molecular substances such as gelatins, cellulose derivatives, dextrans, rosins, and rubbers, and synthetic organic high-molecular substances. The synthetic organic high-molecular substances include hydrocarbon resins such as polyethylenes, polypropylenes, polystyrenes, and polyisobutylenes; vinyl resins such as polyvinyl chlorides, polyvinylidene chlorides, and vinyl chloride-vinyl acetate copolymers; acrylic resins such as polymethyl acrylates and polymethyl methacrylates; and initial condensation products of thermosetting resins such as polyvinyl alcohols, chlorinated polyethylenes, epoxy resins, butyral resins, rubber derivatives, and phenol-formaldehyde resins. When the binder is used in the WORM-type recording layer, the mass of the binder is generally 0.01 to 50 times the dye, preferably 0.1 to 5 times the dye.

An anti-fading agent may be added to the first WORM-type recording layer 14 to increase the light fastness of the layer. In general, the anti-fading agent is a singlet oxygen quencher. The light fastness can further be improved by adding the singlet oxygen quencher in the present invention. The singlet oxygen quencher may be selected from those described in Japanese Laid-Open Patent Publication No. 11-310728.

The ratio of the anti-fading agent such as the singlet oxygen quencher to the dye is generally 0.1% to 50% by mass, preferably 0.5% to 45% by mass, further preferably 3% to 40% by mass, particularly preferably 5% to 25% by mass.

### [Cover layer 16 of first optical information recording medium 10A]

The cover layer 16 of the first optical information recording medium 10A is preferably formed on the first WORM-type recording layer 14 or the barrier layer 20 to be hereinafter described with the first adhesion layer 22 of an adhesive or a tackiness agent in between.

The cover layer 16 of the first optical information recording medium 10A is not particularly limited as long as it is a transparent film, and preferred examples of the materials for the transparent film include acrylic resins such as polycarbonates and polymethyl methacrylates; vinyl chloride resins such as polyvinyl chlorides and vinyl chloride copolymers; epoxy resins; amorphous polyolefins; polyesters; and cellulose triacetates. More preferred among them are polycarbonates and cellulose triacetates.

The term "transparent" means that the transmittance of a light for recording and reproducing is 80% or more.

Various additives may be added to the cover layer 16 as long as they do not interfere with the advantageous effects of the present invention. For example, the cover layer 16 may contain a UV absorber for blocking out lights with wavelengths of 400 nm or less and/or a dye for blocking out lights with wavelengths of 500 nm or more.

The surface physical properties of the cover layer 16 are preferably such that the surface roughness is 5 nm or less as both the 2- and 3-dimensional roughness parameters.

It is preferred that the birefringence of the cover layer 16 is 10 nm or less from the viewpoint of property of concentrating a light for recording and reproducing.

The thickness of the cover layer 16 may be determined depending on the wavelength of a laser light 46 for 11 recording and reproducing or the NA of the first objective lens 42. In the first optical information recording medium 10A, the thickness is preferably 0.01 to 0.5 mm, more preferably 0.05 to 0.12 mm.

The total thickness of the cover layer 16 and the first adhesion layer 22 is preferably 0.09 to 0.11 mm, more preferably 0.095 to 0.105 mm.

A protective layer 44 (a hard coat layer) may be formed on a light incident surface of the cover layer 16 to prevent the light incident surface from being scratched in the production of the first optical information recording medium 10A.

The first adhesion layer 22 preferably contains, as the adhesive, a UV curing resin, an EB curing resin, or a thermosetting resin, and particularly preferably contains a UV curing resin.

In the case of using the UV curing resin as the adhesive, the UV curing resin may be directly applied onto the surface of the barrier layer 20. Alternatively, the UV curing resin may be dissolved in an appropriate solvent such as methyl ethyl ketone or ethyl acetate, and thus-obtained coating liquid may be added to a dispenser and applied therefrom to the barrier layer 20. It is preferred that the UV curing resin for the first adhesion layer 22 has a small cure shrinkage ratio from the viewpoint of preventing curling of the first optical information recording medium 10A. Examples of such UV curing resins include SD-640 available from Dainippon Ink and Chemicals, Inc.

For example, it is preferred that a predetermined amount of the adhesive is applied to a surface of the barrier layer 20, the cover layer 16 is placed thereon, the adhesive is spread between the surface to be adhered and the cover layer 16 uniformly by spin coating, and the adhesive is hardened.

The thickness of the first adhesion layer 22 of the adhesive is preferably 0.1 to 100 µm, more preferably 0.5 to 50 µm, further preferably 10 to 30 µm.

The tackiness agent for the first adhesion layer 22 may be an acrylate-, rubber-, or silicone-based tackiness agent, and the acrylate-based tackiness agent is preferred from the viewpoints of transparency and durability. The acrylate-based tackiness agent is preferably a copolymer of a main component such as 2-ethylhexyl acrylate or n-butyl acrylate with a short-chain component and a crosslinking point component for increasing cohesion force. The short-chain component is an alkyl acrylate or methacrylate such as methyl acrylate, ethyl acrylate, or methyl methacrylate, and the crosslinking point component may be acrylic acid, methacrylic acid, an acrylamide derivative, maleic acid, hydroxylethyl acrylate, glycidyl acrylate, or the like. By appropriately selecting the mixing ratio and types of the main component, the short-chain component, and the crosslinking point component, the glass-transition temperature (Tg) and the crosslinking density of the tackiness agent can be controlled.

A crosslinking agent used in combination with the tackiness agent may be an isocyanate crosslinking agent. Examples of the isocyanate crosslinking agents include isocyanate compounds such as tolylene diisocyanate, 4,4'-diphenylmethane diisocyanate, hexamethylene diisocyanate, xylylene diisocyanate, naphtylene-1,5-diisocyanate, o-toluidine isocyanate, isophorone diisocyanate, and triphenylmethane triisocyanate, and further include products of reactions between these isocyanate compounds and polyalcohols, and polyisocyanates produced by condensation of the isocyanate compounds. Examples of commercially available products of the isocyanate compounds include CORONATE L, CORONATE HL, CORONATE 2030, CORONATE 2031, MILLIONATE MR, and MILLIONATE HTL available from Nippon Polyurethane Industry Co., Ltd.; TAKENATE D-102, TAKENATE D-110N, TAKENATE D-200, and TAKENATE D-202 available from Takeda Pharmaceutical Co., Ltd.; and DESMODUR L, DESMODUR IL, DESMODUR N, and DESMODUR HL available from Sumitomo Bayer.

The tackiness agent may be used such that a predetermined amount of the tackiness agent is applied uniformly to a surface of the barrier layer 20, the cover layer 16 is placed thereon, and then the tackiness agent is hardened. Alternatively, the tackiness agent may be used such that a predetermined amount of the tackiness agent is applied uniformly to a surface of the cover layer 16 to form a tackiness agent layer, the layer is attached to the surface of the barrier layer 20, and then the tackiness agent is hardened.

A commercially available tacky film containing the cover layer 16 and the tackiness agent layer may be used in the present invention.

The thickness of the first adhesion layer 22 of the tackiness agent is preferably 0.1 to 100 µm, more preferably 0.5 to 50 µm, further preferably 10 to 30 µm.

### [Other layers of first optical information recording medium 10A]

The preferred first optical information recording medium 10A may have an optional layer in addition to the essential layers as long as it does not interfere with the advantageous effects of the present invention. Thus, the first optical information recording medium 10_{A} may have a label layer having an image, formed on the back surface of the first substrate 12 (the side opposite to the surface on which the first WORM-type recording layer 14 is formed); the first light reflection layer 18 (to be hereinafter described in detail), formed between the first substrate 12 and the first WORM-type recording layer 14; the barrier layer 20 (to be hereinafter described in detail), formed between the first WORM-type recording layer 14 and the cover layer 16; an interface layer, formed between the first light reflection layer 18 and the first WORM-type recording layer 14; etc. The label layer may be composed of an ultraviolet curing resin, a thermosetting resin, a heat-drying resin, or the like.

Each of the above essential layers and optional layers may have a single- or multi-layer structure.

### [First light reflection layer 18 of first optical information recording medium 10A]

In the first optical information recording medium 10A, it is preferred that the first light reflection layer 18 is formed between the first substrate 12 and the first WORM-type recording layer 14 to increase the reflectance to the laser light 46 and to improve the recording/reproducing properties.

The first light reflection layer 18 may be formed on the substrate by vacuum-depositing, sputtering, or ion-plating a light reflective substance having a high reflectance to the laser light 46.

The thickness of the first light reflection layer 18 is generally 10 to 300 nm, preferably 50 to 200 nm.

The reflectance is preferably 70% or more.

Examples of the light reflective substances with high reflectance include metals and metalloids of Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, A1, Ga, In, Si, Ge, Te, Pb, Po, Sn, Bi, etc., and stainless steels. These light reflective substances may be used singly or in combination, or as an alloy. The light reflective substance is preferably Cr, Ni, Pt, Cu, Ag, Au, A1, or a stainless steel, particularly preferably Au, Ag, A1, or an alloy thereof, most preferably Au, Ag, or an alloy thereof.

### [Barrier layer 20 (intermediate layer) of first optical information recording medium 10A]

In the first optical information recording medium 10A, the barrier layer 20 is preferably formed between the first WORM-type recording layer 14 and the cover layer 16.

The barrier layer 20 is formed for increasing the storability of the first WORM-type recording layer 14, increasing the adhesion between the first WORM-type recording layer 14 and the cover layer 16, controlling the reflectance, or controlling the heat conductivity, etc.

The barrier layer 20 may be composed of any material that can transmit the light for recording and reproducing and can provide the above functions. For example, the material of the barrier layer 20 is generally a material having low gas permeability and low water permeability, and is preferably a dielectric substance.

Specific examples of the materials include nitrides, oxides, carbides, and sulfides of Zn, Si, Ti, Te, Sn, Mo, Ge, etc. The material of the barrier layer 20 is preferably MoO₂, GeO₂, TeO, SiO₂, TiO₂, ZnO, SnO₂, ZnO-Ga₂O₃, Nb₂O₅, or Ta₂O₅, more preferably SnO₂, ZnO-Ga₂O₃, SiO₂, Nb₂O₅, or Ta₂O₅.

The barrier layer 20 may be formed by a vacuum film forming method such as vacuum deposition, DC sputtering, RF sputtering, or ion plating. The barrier layer 20 is preferably formed by a sputtering method.

The thickness of the barrier layer 20 is preferably 1 to 200 nm, more preferably 2 to 100 nm, further preferably 3 to 50 nm.

Next, the second optical information recording medium 10B is described below.

The second optical information recording medium 10B has a stuck layer structure. Typical examples of the layer structure are as follows:
(1) a first layer structure (shown in FIG. 2), where a second WORM-type recording layer 26, a second light reflection layer 30, and a second adhesion layer 32 are formed in this order on a second substrate 24, and a protective substrate 28 is disposed on the second adhesion layer 32;
(2) a second layer structure (not shown), where a second WORM-type recording layer 26, a second light reflection layer 30, a protective layer, and a second adhesion layer 32 are formed in this order on a second substrate 24, and a protective substrate 28 is disposed on the second adhesion layer 32;
(3) a third layer structure (not shown), where a second WORM-type recording layer 26, a second light reflection layer 30, a protective layer, a second adhesion layer 32, and a protective layer are formed in this order on a second substrate 24, and a protective substrate 28 is disposed on the protective layer;
(4) a fourth layer structure (not shown), where a second WORM-type recording layer 26, a second light reflection layer 30, a protective layer, a second adhesion layer 32, a protective layer, and a light reflection layer are formed in this order on a second substrate 24, and a protective substrate 28 is disposed on the light reflection layer;
(5) a fifth layer structure (not shown), where a second WORM-type recording layer 26, a second light reflection layer 30, a second adhesion layer 32, and a light reflection layer are formed in this order on a second substrate 24, and a protective substrate 28 is disposed on the light reflection layer.

The above first to fifth layer structures are considered to be illustrative, and the layer structure of the optical information recording medium is not limited thereto. A part of the first to fifth layer structures may be replaced or removed. The second WORM-type recording layer 26 may be formed also on the protective substrate 28, and in this case, the resultant optical information recording medium is capable of recording and reproducing on the both surfaces. Each of the layers may have a single- or multi-layer structure.

An example of the second optical information recording medium 10B, which has the second WORM-type recording layer 26, the second light reflection layer 30, the second adhesion layer 32, and the protective substrate 28 in this order on the second substrate 24 as shown in FIG. 2, is described in detail below.

### [Second substrate 24 of second optical information recording medium 10B]

In the second optical information recording medium 10B, the second substrate 24 has the second pregrooves 36 (guide grooves, having groove portions 50 and lands 52) with particular track pitch, groove width (half width), groove depth, and wobble amplitude to be hereinafter described. The second pregrooves 36 are formed in order to achieve a recording density higher than those of CD-R and DVD-R, and are suitable for media using bluish purple laser lights, etc.

The track pitch of the second pregrooves 36 is 200 to 600 nm. The track pitch is preferably 450 nm or less, more preferably 430 nm or less. Further, the track pitch is preferably 300 nm or more, more preferably 330 nm or more, further preferably 370 nm or more. When the track pitch is less than 200 nm, it is difficult to form the second pregrooves 36 accurately, and disadvantageous crosstalk is often caused. When the track pitch is more than 600 nm, the recording density is reduced in some cases.

The groove width (the half width) of each second pregroove 36 is 50 to 300 nm. The groove width is preferably 290 nm or less, more preferably 280 nm or less, further preferably 250 nm or less. Further, the groove width is preferably 100 nm or more, more preferably 120 nm or more, further preferably 140 nm or more. When the groove width is less than 50 nm, the groove may be insufficiently transferred in a forming process, and the error rate may be increased in a recording process. When the groove width is more than 300 nm, a pit formed in a recording process may be expanded to cause crosstalk, and a sufficient modulation cannot be obtained in some cases.

The groove depth of each second pregroove 36 is 30 to 150 nm. The groove depth is preferably 140 nm or less, more preferably 130 nm or less, further preferably 120 nm or less. Further, the groove depth is preferably 40 nm or more, more preferably 50 nm or more, further preferably 60 nm or more. When the groove depth of the second pregroove 36 is less than 30 nm, a sufficient recording modulation cannot be obtained in some cases. When the groove depth is more than 150 nm, the reflectance may be largely reduced.

The second substrate 24 in the second optical information recording medium 10B may contain a material selected from various conventional substrate materials for optical information recording media. Specific examples and preferred embodiments of the material for the second substrate 24 are the same as those of the material for the first substrate 12 in the first optical information recording medium 10A.

The thickness of the second substrate 24 is 0.1 to 1.0 mm, preferably 0.2 to 0.8 mm, more preferably 0.3 to 0.7 mm.

An undercoat layer is preferably formed on a surface of the second substrate 24, on which the second WORM-type recording layer 26 to be hereinafter described is formed, to improve flatness and adhesion. Specific examples and preferred embodiments of the material, coating method, and thickness of the undercoat layer on the second substrate 24 are the same as those of the undercoat layer on the first substrate 12.

### [Second WORM-type recording layer 26 of second optical information recording medium 10B]

The details of the second WORM-type recording layer 26 in the second optical information recording medium 10B are the same as those of the first WORM-type recording layer 14 in the first optical information recording medium 10A.

### [Second light reflection layer 30 of second optical information recording medium 10B]

In the second optical information recording medium 10B, the second light reflection layer 30 may be formed on the second WORM-type recording layer 26 to increase the reflectance to the laser light 46 or to improve the recording/reproducing properties. The details of the second light reflection layer 30 in the second optical information recording medium 10B are the same as those of the first light reflection layer 18 in the first optical information recording medium 10A.

### [Second adhesion layer 32 of second optical information recording medium 10B]

The second adhesion layer 32 in the preferred second optical information recording medium 10B is optionally formed to increase the adhesion between the second light reflection layer 30 and the protective substrate 28.

The second adhesion layer 32 preferably contains a light curing resin. It is preferred that the light curing resin has a small cure shrinkage ratio from the viewpoint of preventing curling of the resultant disk. Examples of such light curing resins include UV curing resins (UV curing adhesives) such as SD-640 and SD-661 available from Dainippon Ink and Chemicals, Inc.

The second adhesion layer 32 preferably has a thickness of 1 to 1000 µm to maintain elasticity.

### [Protective substrate 28 of second optical information recording medium 10B]

The material and shape of the protective substrate 28 (a dummy substrate) in the preferred second optical information recording medium 10B may be the same as those of the second substrate 24. The thickness of the protective substrate 28 is 0.1 to 1.0 mm, preferably 0.2 to 0.8 mm, more preferably 0.3 to 0.7 mm.

### [Protective layer (not shown) of second optical information recording medium 10B]

In the second optical information recording medium 10B, a protective layer may be formed to physically and chemically protect the second light reflection layer 30, the second WORM-type recording layer 26, etc.

Examples of materials of the protective layer include inorganic substances such as ZnS, ZnS-SiO₂, SiO, SiO₂ MgF₂, SnO₂, and Si₃N₄, and organic substances such as thermoplastic resins, thermosetting resins, and UV curing resins.

For example, the protective layer may be formed by extruding a plastic material into a film, and by attaching the film to the light reflection layer using an adhesive. Further, the protective layer may be formed by vacuum deposition, sputtering, coating, or the like.

In the case of using a thermoplastic or thermosetting resin for the protective layer, the protective layer may be formed by dissolving the resin in an appropriate solvent, and by applying and drying thus-obtained coating liquid. In the case of using a UV curing resin for the protective layer, the protective layer may be formed by applying the resin or a coating liquid containing the resin and an appropriate solvent, and by irradiating the applied resin with a UV light to harden the resin. Various additives such as antistatic agents, antioxidants, and UV absorbers may be added to these coating liquids in accordance with the purpose. The protective layer generally has a thickness of 0.1 µm to 1 mm.

### [Other layers of the second optical information recording medium 10B]

The second optical information recording medium 10B may have an optional layer in addition to the essential layers as long as it does not interfere with the advantageous effects of the present invention. The details of the optional layer in the second optical information recording medium 10B may be the same as those of the optional layer in the first optical information recording medium 10A.

### <Optical information recording method>

Methods for recording electronic information on the first and second optical information recording media 10A and 10B (hereinafter referred to as optical information recording methods) are described below.

In the case of the first optical information recording medium 10A, a recording laser light 46 such as a semiconductor laser light is applied to the side of the cover layer 16 through the first objective lens 42 (for example, having a numerical aperture NA of 0.85) while rotating the recording medium 10A at a constant linear speed (0.5 to 10 m/second) or a constant angular speed. When the recording medium 10A is irradiated with the laser light 46, the first WORM-type recording layer 14 absorbs the laser light 46 and is heated locally, and the optical properties of the first WORM-type recording layer 14 are physically or chemically changed, for example by generation of a pit, whereby the information is recorded thereon.

In the case of the second optical information recording medium 10B, a recording laser light 46 such as a semiconductor laser light is applied to the side of the second substrate 24 through the second objective lens 48 (for example, having a numerical aperture NA of 0.65) while rotating the recording medium 10B at a constant linear speed (0.5 to 10 m/second) or a constant angular speed in the same manner. When the recording medium 10B is irradiated with the laser light 46, the second WORM-type recording layer 26 absorbs the laser light 46 and is heated locally, and the optical properties of the second WORM-type recording layer 26 are physically or chemically changed, for example by generation of a pit, whereby the information is recorded thereon.

A semiconductor laser light having an emission wavelength of 440 nm or less is preferably used as the laser light 46. The recording light is further preferably a bluish purple semiconductor laser light having an emission wavelength of 390 to 415 nm, or a bluish purple SHG laser light having a center emission wavelength 425 nm obtained by treating a semiconductor infrared laser light having a center emission wavelength of 850 nm with an optical waveguide device to reduce the wavelength into half. Further, it is particularly preferred from the viewpoint of the recording density that the recording light is a bluish purple semiconductor laser light having an emission wavelength of 390 to 415 nm.

In the case of the first optical information recording medium 10A, the recorded information may be reproduced by irradiating the side of the protective layer 44 with the laser light 46, and by detecting the reflected light, while rotating the recording medium 10A at the above constant linear speed. In the case of the second optical information recording medium 10B, the recorded information may be reproduced by irradiating the side of the second substrate 24 with the laser light 46, and by detecting the reflected light, while rotating the recording medium 10B at the above constant linear speed.

### Examples

The present invention is described in more detail below with reference to Examples without intention of restricting the scope of the invention.

### [Synthesis of example compound (A-1)]

The compound (1) used as a starting material was synthesized by a method of producing the compound (f1) described in Japanese Laid-Open Patent Publication No. 2006-57076.

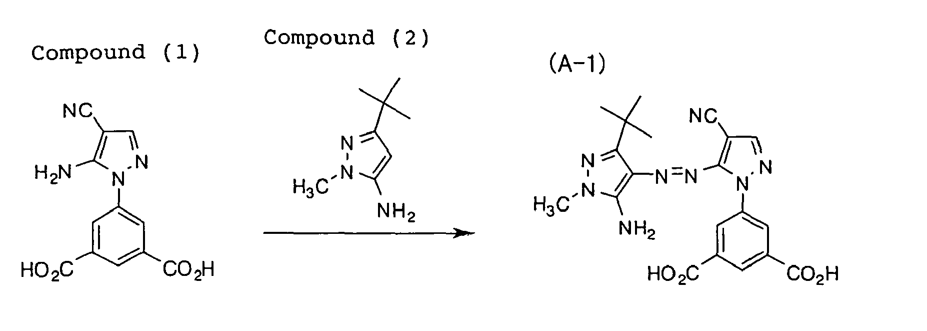

2 ml of sulfuric acid was added to a 100-ml conical flask, and 9 ml of acetic acid was slowly added thereto dropwise under ice cooling. 1.4 ml of 40% nitrosylsulfuric acid was slowly added to the mixture dropwise, 2 g of the compound (1) was added thereto stepwise under a controlled temperature of 0°C to 5°C, and the resulting acidic liquid was stirred for 15 minutes. The acidic liquid was added stepwise to 30 ml of a methanol solution of the compound (2) under ice cooling, and the resultant mixture was stirred for 1 hour. The mixture was heated to the room temperature and stirred for 2 hours, and 100 ml of distilled water was added thereto to generate a precipitate. The mixture was subjected to filtration and drying to obtain 2 g of the compound (A-1).

### [Synthesis of example compound (A-37)]

The compound (A-37) was synthesized in the same manner as the example compound (A-1).

### [Synthesis of example compound (A-17)]

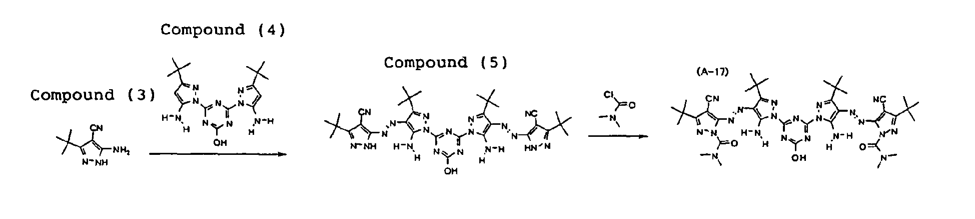

4 g of the compound (3) was dispersed in 5 ml of acetic acid and 7.5 ml of propionic acid, and 7.4 ml of 10-N hydrochloric acid was added thereto dropwise. 4 ml of an aqueous solution containing 1.85 g of sodium nitrite was slowly added dropwise to the dispersion under a controlled temperature of 0°C to 5°C, and the resultant acidic liquid was stirred for 15 minutes. The acidic liquid was added stepwise to 40 ml of a methanol solution of the compound (4) under ice cooling, and the resultant mixture was stirred for 1 hour. The mixture was heated to the room temperature and stirred for 2 hours, and was subjected to filtration and drying to obtain 3.5 g of the compound (5).

2 g of the compound (5), 1.15 g of potassium carbonate, and 10 ml of DMAC were added to a three-necked flask and stirred at 40°C. The mixture was ice-cooled, 0.52 ml of N,N-dimethylcarbamoyl chloride was added thereto, and the resultant mixture was heated to the room temperature and stirred for 1 hour. The mixture was heated to 60°C and stirred for 2 hours, and 100 ml of distilled water was added thereto to generate a precipitate. The mixture was subjected to filtration and drying to obtain 2 g of the compound (A-17).

### [Example 1]: Production of first optical information recording medium 10A

### (Preparation of first substrate 12)

A polycarbonate resin substrate (a first substrate 12) with a thickness of 1.1 mm, an outer diameter of 120 mm, and an inner diameter of 15 mm, which had spiral first pregrooves 34 with a track pitch of 320 nm, a groove width (a concave portion width) of 140 nm, a groove depth of 45 nm, a groove inclination angle of 65°, and a wobble amplitude of 20 nm, was prepared by injection forming. Mastering of a stamper used in the injection forming was carried out by using a laser cutting (351 nm).

### (Formation of first light reflection layer 18)

A 100-nm-thick vacuum-formed film of an ANC light reflection layer (a first light reflection layer 18 containing 98.1 at% of Ag, 0.7 at% of Nd, and 0.9 at% of Cu) was formed on the first substrate 12 by DC sputtering using CUBE manufactured by Unaxis in an Ar atmosphere. The thickness of the first light reflection layer 18 was controlled by selecting the sputtering time.

### (Formation of first WORM-type recording layer 14)

A dye-containing coating liquid was prepared by dissolving 1 g of the compound (A-1) in 100 ml of 2,2,3,3-tetrafluoropropanol. Then, the prepared dye-containing coating liquid was applied to the first light reflection layer 18 by a spin coating method under conditions of 23°C and 50%RH while changing the rotation rate within a range of 300 to 4,000 rpm. The applied coating liquid was left under conditions of 23°C and 50%RH for 1 hour to form a first WORM-type recording layer 14, which had a thickness of 40 nm on a groove portion 40 and a thickness of 15 nm on a land 38.

The formed first WORM-type recording layer 14 was subjected to an annealing treatment in a clean oven. The annealing treatment was carried out at 80°C for 1 hour while supporting the first substrate 12 by a vertical stack pole at a distance kept by a spacer.

### (Formation of barrier layer 20)

A 5-nm-thick barrier layer 20 of ZnO-Ga₂O₃ (ZnO:Ga₂O₃ = 3:7 (mass ratio)) was formed on the first WORM-type recording layer 14 by RF sputtering using CUBE manufactured by Unaxis in an Ar atmosphere.

### (Sticking of cover layer 16)

A polycarbonate film (PUREACE available from Teijin, 80-µm thick) having an inner diameter of 15 mm and an outer diameter of 120 mm was used as a cover layer 16. A tackiness agent layer was formed on one side of the polycarbonate film such that the total thickness of the tackiness agent layer and the polycarbonate film was 100 µm.

The cover layer 16 was placed on the barrier layer 20 such that the barrier layer 20 was in contact with the tackiness agent layer. Then, the cover layer 16 was pressed by a pressing member, to stick the cover layer 16 on the barrier layer 20.

An optical information recording medium of Example 1 was produced in this manner.

Optical information recording media of Examples 2 and 3 were produced in the same manner as Example 1 except for using the compounds (A-2), (A-7), (A-9), (A-13), (A-15), (A-20), (A-25), (A-35), (A-49), and (A-51), respectively, instead of the compound (A-1).

### [Comparative Examples 1 to 4]

Optical information recording media of Comparative Examples 1 to 4 were produced respectively in the same manner as Example 1 except that 1 g of each of the following comparative compounds (A), (B), (C), and (D) was dissolved in 100 ml of 2,2,3,3-tetrafluoropropanol to prepare a dye-containing coating liquid.

### Comparative compound (A)

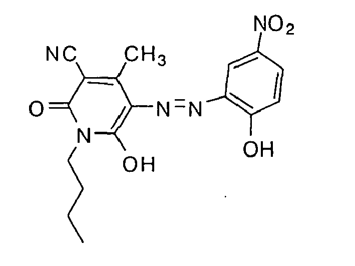

### Comparative compound (B)

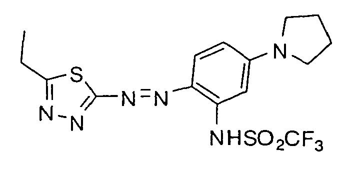

Comparative compound (C), described in Japanese Laid-Open Patent Publication No. 2005-162812

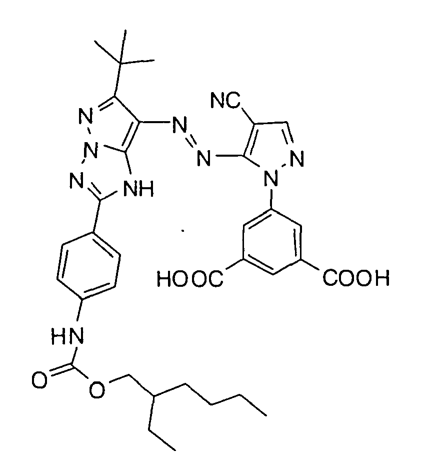

Comparative compound (D), described in Japanese Laid-Open Patent Publication No. 2005-162812

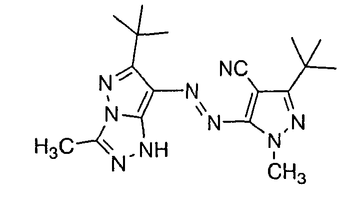

### <Evaluation of optical information recording medium>

### (1) Evaluation of C/N (carrier-to-noise ratio)

A 0.16-µm signal (2T) was recorded and reproduced in each of the produced optical information recording media by using a recording/reproducing evaluator (DDU1000 manufactured by Pulstec Industrial Co., Ltd.) having 403-nm laser and NA 0.85 pickup under conditions of a clock frequency of 66 MHz and a linear speed of 4.92 m/s. The recorded pit was reproduced by a spectrum analyzer (FSP-3 manufactured by Rohde & Schwarz). An output at 16 MHz after recording was used as Carrier output, an output at 16 MHz before recording was used as Noise output, and a C/N value was obtained by (the output after recording - the output before recording). In this evaluation, the signal was recorded on the grooves by an optical information recording method according to the present invention. Further, the recording power was 5 mW, and the reproducing power was 0.3 mW. The 2T recording C/N ratio is used as a measure of recording properties. As the recording power is increased, the 2T recording C/N ratio is increased. In view of both the 2T recording C/N ratio and the recording sensitivity, when the C/N ratio (after recording) is 30 dB or more at approximately 5 mW, the recording medium has sufficient recording sensitivity and reproduced signal intensity, and thereby has satisfactory recording properties. The results are shown in Table 1.

### (2) Evaluation of light fastness of dye film

Dye-containing coating liquids equal to those of Examples 1 to 3, and Comparative Examples 1 to 4 were prepared, and each coating liquid was applied to a 1.1-mm-thick glass plate by a spin coating method under conditions of 23°C and 50%RH while changing the rotation rate within a range of 500 to 1,000 rpm. The glass plate with the dye film was stored for 24 hours under conditions of 23°C and 50%RH, and then subjected to a light fastness test using a merry-go-round-type light fastness tester (Cell Tester Model III manufactured by Eagle Engineering, equipped with WG320 Filter manufactured by Schott). The absorption spectrum of the dye film was measured using W-1600PC manufactured by SHIMADZU immediately before the light fastness test and 48 hours after the light fastness test, and the change of the absorbancy at the maximum absorption wavelength was evaluated.

As shown in Table 1, the azo dyes of Examples according to the present invention were more excellent in the solubility, film stability, and light fastness as compared with the conventional azo dyes used in Comparative Examples 1 to 4. Further, the azo dyes of Examples had excellent recording/reproducing properties.

The compounds (A-2), (A-13), (A-15), (A-20), (A-35), (A-49), and (A-51) could be used in discs, and a recording pit could be formed on each disc, in the same manner as Example 1.

Further, the light fastness of_dye films of the compounds (A-2), (A-13), (A-15), (A-49), and (A-51) were evaluated. As a result, the dye films had residual dye ratios of 80% or more, and thus were excellent in the light fastness.

**Table 1**

| | Azo dye | Light fastness of dye film⁽¹⁾ | Recording/reproducing properties⁽²⁾ (Pit reading before Xe lamp irradiation) |
|---|---|---|---|
| Example 1 | Compound (A-1) | Good | Excellent |
| Example 2 | Compound (A-7) | Excellent | Good |
| Example 3 | Compound (A-9) | Excellent | Good |
| Comparative Example 1 | Compound (A) | Measurement impossible⁽³⁾ | Impossible⁽³⁾ |
| Comparative Example 2 | Compound (B) | Measurement impossible⁽³⁾ | Impossible⁽³⁾ |
| Comparative Example 3 | Compound (C) | Fair | Poor |
| Comparative Example 4 | Compound (D) | Fair | Poor |

| | | | |
|---|---|---|---|
| Note: (1) Evaluated as "Excellent" when the residual dye ratio was 85% or more at the absorption λmax 48 hours after the irradiation with an Xe light, evaluated as "Good" when the ratio was 70% or more and less than 85%, evaluated as "Fair" when the ratio was 60% or more and less than 70%, and evaluated as "Poor" when the ratio was less than 60%; (2) Evaluated as "Excellent" when the 2T recording C/N was 35 dB or more, evaluated as "Good" when the ratio was 30 dB or more and less than 35 dB, and evaluated as "Poor" when the ratio was less than 30 dB; and (3) The recording layer could not sufficiently be formed due to poor solubility, resulting in recording failure. | | | |

## Claims

1. An optical information recording medium comprising a recording layer (14) on which information is recorded by irradiation with a laser light having a wavelength of 440 nm or less, wherein
said recording layer (14) comprises at least an azo dye,
said azo dye has an -N=N- group and a nitrogen-containing heterocyclic group bonded to one nitrogen atom thereof, and contains no metal atoms or metal ions in the molecule, and
said nitrogen-containing heterocyclic group is represented by one of the following general formulae (I-1) to (I-3): 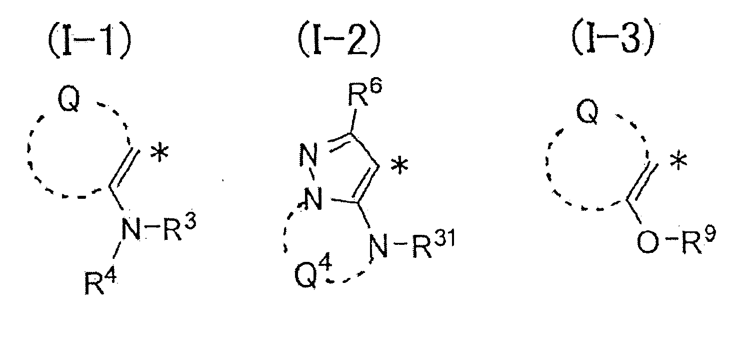 wherein Q represents a group forming a nitrogen-containing heterocycle, Q⁴ represents a group for connecting the adjacent nitrogen atoms, thereby forming a nitrogen-containing heterocycle, R³, R⁴ , R⁶, and R⁹ independently represent a hydrogen atom or a substituent, R³¹ represents a monovalent substituent, and each asterisk * represents a position at which said nitrogen-containing heterocyclic group is bonded to said -N=N- group,
wherein a pyrazole ring is bonded to at least one nitrogen atom of said -N=N- group, and said pyrazole ring being formed by Q in said general formula (I-1) or (I-3), or being the pyrazole ring in said general formula (I-2).

2. An optical information recording medium according to claim 1, wherein
said azo dye has said nitrogen-containing heterocyclic group bonded to one nitrogen atom of said -N=N- group and a pyrazole ring bonded to the other nitrogen atom thereof, and contains no metal atoms or metal ions in the molecule, and
said nitrogen-containing heterocyclic group is represented by one of the following general formulae (I-1) to (I-3): 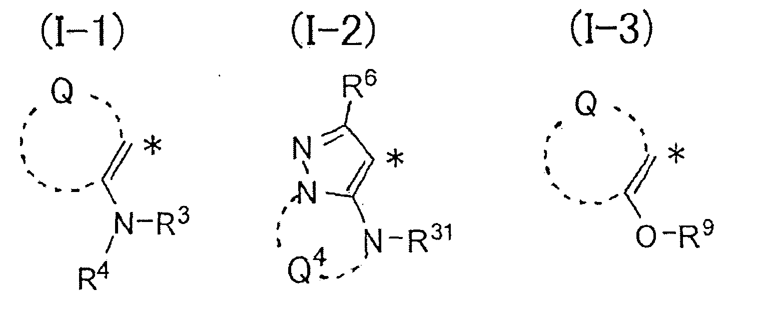 wherein Q represents a group forming a nitrogen-containing heterocycle, Q⁴ represents a group for connecting the adjacent nitrogen atoms, thereby forming a nitrogen-containing heterocycle, R³, R⁴, R⁶, and R⁹ independently represent a hydrogen atom or a substituent, R³¹ represents a monovalent substituent, and each asterisk * represents a position at which said nitrogen-containing heterocyclic group is bonded to said -N=N- group.

3. An optical information recording medium according to claim 2, wherein
said recording layer (14) contains said azo dye represented by the following general formula (1): 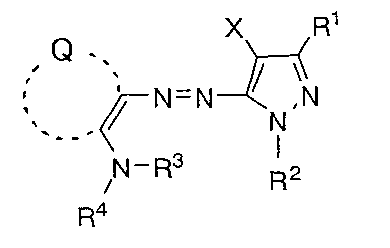 wherein Q represents a group forming a nitrogen-containing heterocycle, X represents an electron attractive group having a Hammett's substituent constant σp of 0.20 or more, and R¹ to R⁴ independently represent a hydrogen atom or a substituent.

4. An optical information recording medium according to claim 3, wherein
said azo dye is represented by the following general formula (2): 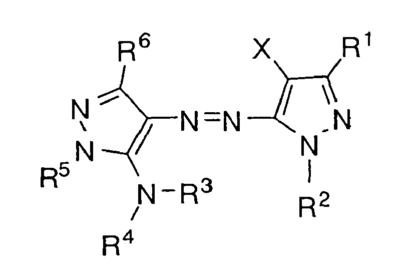 wherein X represents an electron attractive group having a Hammett's substituent constant σp of 0.20 or more, and R¹ to R⁶ independently represent a hydrogen atom or a substituent.

5. An optical information recording medium according to claim 2, wherein
said azo dye is represented by the following general formula (3): 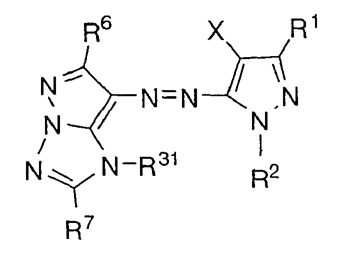 wherein X represents an electron attractive group having a Hammett's substituent constant σp of 0.20 or more, R¹, R², R⁶, and R⁷ independently represent a hydrogen atom or a substituent, and R³¹ represents a monovalent substituent.

6. An optical information recording medium according to claim 2, wherein
said azo dye is represented by the following general formula (4): 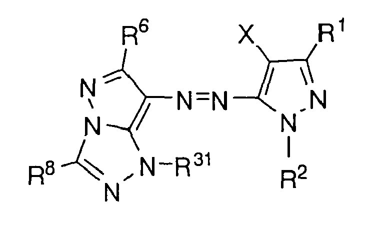 wherein X represents an electron attractive group having a Hammett's substituent constant σp of 0.20 or more, R¹, R², R⁶, and R⁸ independently represent a hydrogen atom or a substituent, and R³¹ represents a monovalent substituent.

7. An optical information recording medium according to claim 2, wherein
said azo dye is represented by the following general formula (5): 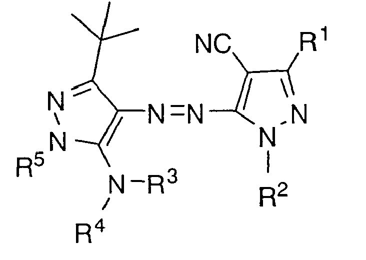 wherein R¹, R², R³, R⁴, and R⁵ independently represent a hydrogen atom or a substituent.

8. An optical information recording medium according to claim 1, wherein
said azo dye is represented by the following general formula (6): 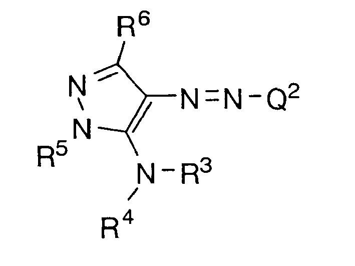 wherein Q² represents a nitrogen-containing heterocyclic group other than pyrazole groups, and R³ to R⁶ independently represent a hydrogen atom or a substituent.

9. An optical information recording medium according to claim 1, wherein
said azo dye is represented by the following general formula (7): 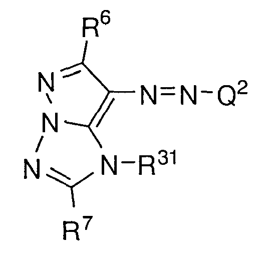 wherein Q² represents a nitrogen-containing heterocyclic group, R⁶ and R⁷ independently represent a hydrogen atom or a substituent, and R³¹ represents a monovalent substituent.

10. An optical information recording medium according to claim 1, wherein
said azo dye is represented by the following general formula (8): 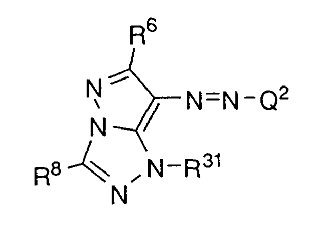 wherein Q² represents a nitrogen-containing heterocyclic group, R⁶ and R⁸ independently represent a hydrogen atom or a substituent, and R³¹ represents a monovalent substituent.

11. An optical information recording medium according to any one of claims 8 to 10, wherein
said Q² represents a substituted or unsubstituted 1,2,4-thiadiazole group, a substituted or unsubstituted 1,3,4-thiadiazole group, or a 4,5-dicyanoimidazole group.

12. An optical information recording medium according to claim 2, wherein
said azo dye is represented by the following general formula (9): 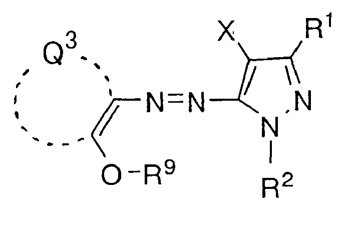 wherein Q³ represents a group forming a nitrogen-containing heterocycle, X represents an electron attractive group having a Hammett's substituent constant σp of 0.20 or more, and R¹, R², and R⁹ independently represent a hydrogen atom or a substituent.

13. An optical information recording medium according to claim 12, wherein
said nitrogen-containing heterocyclic group formed by Q³ contains a pyrazole ring, a pyrrole ring, an imidazole ring, a thiazole ring, an oxazole ring, a pyrroline ring, a pyridine ring, a pyrazine ring, a pyrimidine ring, a pyridazine ring, a 1,2,4-triazine ring, or a ring forming a moiety represented by one of the following formulae (C-1) to (C-4): 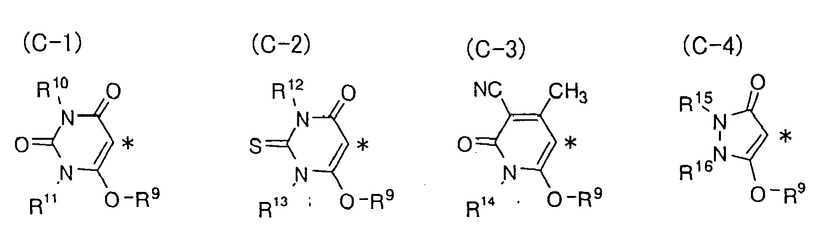 wherein R⁹ to R¹⁶ independently represent a hydrogen atom or a substituent, and each asterisk * represents a position at which said nitrogen-containing heterocyclic group is bonded to the -N=N- group.

14. An optical information recording medium according to any one of claims 1 to 13, further comprising a light reflection layer (18) containing a metal.

15. An optical information recording medium according to any one of claims 1 to 14, further comprising a protective layer.

16. An optical information recording medium according to any one of claims 1 to 15, wherein
said recording layer (14) is formed on a substrate (12),
said substrate (12) is a transparent, disc-shaped substrate having pregrooves with a track pitch of 50 to 500 nm on at least one surface thereof, and
said recording layer (14) is formed on said surface having said pregrooves.
